(19) Europäisches Patentamt
European Patent Office
Office européen des brevets

(11) **EP 3 966 037 B1**

(12) **EUROPÄISCHE PATENTSCHRIFT**

(45) Veröffentlichungstag und Bekanntmachung des Hinweises auf die Patenterteilung:
**15.03.2023 Patentblatt 2023/11**

(21) Anmeldenummer: **20723378.4**

(22) Anmeldetag: **30.04.2020**

(51) Internationale Patentklassifikation (IPC):
*B32B 27/32* (2006.01)    *B29C 48/21* (2019.01)
*B29C 55/14* (2006.01)    *B32B 7/02* (2006.01)
*B32B 27/08* (2006.01)    *B32B 27/20* (2006.01)
*H01M 10/052* (2010.01)

(52) Gemeinsame Patentklassifikation (CPC):
**B32B 7/02; B29C 48/08; B29C 48/21;**
**B29C 48/305; B29C 48/40; B29C 48/49;**
**B29C 48/92; B29C 55/14; B32B 27/08;**
**B32B 27/205; B32B 27/24; B32B 27/327;**
**H01M 10/052; H01M 50/417; H01M 50/457;**

(Forts.)

(86) Internationale Anmeldenummer:
**PCT/EP2020/062082**

(87) Internationale Veröffentlichungsnummer:
**WO 2020/225108 (12.11.2020 Gazette 2020/46)**

(54) **FOLIE MIT WENIGSTENS ZWEI SCHICHTEN UND VERFAHREN ZU IHRER HERSTELLUNG**

FILM WITH AT LEAST TWO LAYERS AND METHOD FOR PRODUCING THE SAME

FILM COMPRENANT AU MOINS DEUX COUCHES ET SON PROCÉDÉ DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2019 DE 102019112089**

(43) Veröffentlichungstag der Anmeldung:
**16.03.2022 Patentblatt 2022/11**

(73) Patentinhaber: **Brückner Maschinenbau GmbH & Co. KG**
**83313 Siegsdorf (DE)**

(72) Erfinder:
• **KNOCHE, Thomas**
**83278 Traunstein (DE)**
• **ZIER, Martin**
**83026 Rosenheim (DE)**
• **KUHNIGK, Steffen**
**83334 Inzell (DE)**

(74) Vertreter: **Flach Bauer & Partner**
**Patentanwälte mbB**
**Adlzreiterstraße 11**
**83022 Rosenheim (DE)**

(56) Entgegenhaltungen:
**EP-A1- 3 006 210      WO-A1-2015/190264**
**US-A1- 2006 141 351   US-A1- 2009 117 454**
**US-A1- 2017 151 534   US-A1- 2017 309 883**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 966 037 B1

(52) Gemeinsame Patentklassifikation (CPC): (Forts.)
**H01M 50/491;** B29C 2948/92704; B32B 2250/02;
B32B 2250/03; B32B 2250/242; B32B 2250/40;
B32B 2255/10; B32B 2255/20; B32B 2264/102;
B32B 2270/00; B32B 2307/206; B32B 2307/518;
B32B 2307/558; B32B 2307/5825; B32B 2307/714;
B32B 2307/72; B32B 2307/724; B32B 2307/734;
B32B 2457/10

**Beschreibung**

**Einleitung**

Die vorliegende Erfindung betrifft eine biaxial orientierte Folie umfassend wenigstens die zwei Schichten (A) und (B), wobei Schicht (A) ein Polyethylen mit niedrigem Molekulargewicht enthält und Schicht (B) ein Polyethylen mit einem höheren Molekulargewicht enthält, wobei Schicht (A) wenigstens 50 Gewichtsprozent des Polyethylen mit niedrigem Molekulargewicht enthält und Schicht (B) wenigstens 50 Gewichtsprozent des Polyethylens mit hohem Molekulargewicht enthält und die Folie eine Porosität im Bereich von 30 bis 70 % aufweist. Ferner kann die erfindungsgemäße Folie zusätzlich mit einer keramischen Beschichtung versehen sein. Ein weiterer Gegenstand der vorliegenden Erfindung ist ein Verfahren zur Herstellung einer solchen Folie nach dem Evapore-Verfahren.

**Stand der Technik**

Zur Herstellung von Akkumulatoren, insbesondere von Lithium-Ionen-Akkumulatoren, werden Separator-Folien (Batterie Separator Folien, BSF) benötigt, die eingesetzt werden um benachbarte parallele Anoden und Kathoden (Elektroden) physisch und elektrisch voneinander zu trennen. Solche Separator-Folien sollten dünn und leicht sein und in der Lage sein, ein Durchwachsen metallischer Dendriten, die zu einem Kurzschluss führen können, zu verhindern. Ferner müssen Sie in der Lage sein, den Elektrolyten aufzunehmen und gleichmäßig über die Elektrodenoberflächen zu verteilen. Ferner dürfen sie den Ionentransport zwischen den Elektroden nicht unterdrücken, das heißt, sie müssen eine ausreichende Ionenleitfähigkeit im Elektrolyt gewährleisten. Im ungefüllten Zustand der Batterie-Separator-Folie, das heißt, wenn sie nicht mit Elektrolyt in Kontakt steht, äußert sich die Fähigkeit zum Ionentransport in einer Permeabilität für Gase, wie z.B. Luft, weshalb die Luftdurchlässigkeit als Maß für die Ionenleitfähigkeit Verwendung finden kann. Dabei steht die Luftdurchlässigkeit auch stellvertretend für die Durchlässigkeit für andere Gase. Ferner sollten solche Separator-Folien frei von Defekten, wie Pinholes oder dergleichen sein und preiswert herstellbar sein.

Im Stand der Technik sind unter anderem zwei Verfahren bekannt mit denen solche Separator-Folien hergestellt werden können, nämlich der sogenannte "Wet-Prozess" und der "Evapore-Prozess" (Evapore-Verfahren).

Der Wet-Prozess ist ein Mono-, oder Mehrlagengießprozess zur Erzeugung von porösen Separatorfolien auf Basis von Polyethylen (typischerweise vom Typ PE-2 wie unten beschrieben). Die Materialrezeptur sieht eine Mischung von Polyethylen mit Mineralöl vor, die durch Doppelschneckenextrusion homogenisiert und als Gießfolie urgeformt wird. Anschließend folgt eine sequentielle biaxiale Verstreckung. Das Mineralöl verbleibt dabei weitestgehend in der Folie. Nach der ersten Verstreckung wird das Mineralöl mittels Dichlormethan extrahiert und die Folie anschließend von verbleibendem Dichlormethan getrocknet. Zum Abschluss folgt eine weitere Verstreckung in Querrichtung. Das im Extraktionsbad verbleibende Dichlormethan/Mineralöl-Gemisch wird durch Destillation und Adsorptionsverfahren kostenintensiv aufbereitet und dem Prozess teilweise zurückgeführt.

Im Evapore-Verfahren wird statt eines Mineralöls ein entaromatisiertes Kohlenwasserstoffgemisch verwendet, welches zusammen mit dem Polyethylen in einer Doppelschneckenextrusion vermischt wird. Während die daraus hergestellte Gießfolie sequentiell biaxial gestreckt wird, geht das Solvent in die Gasphase über. Das entaromatisierte Kohlenwasserstoffgemisch wird dabei nahezu vollständig aus der Folie entfernt, gesammelt und durch Verbrennung zur Energiegewinnung eingesetzt. Die so erzeugte Folie benötigt keine weiteren Extraktionsschritte oder Nachverstreckungen. Die erzeugte Energie aus der Nachverbrennung kann dem Prozess zurückgeführt werden. Der Prozess ist in seinen Grundprinzipien im Detail in der Druckschrift WO 2012/138398 A1 beschrieben. Das Herstellen von mehrschichtigen Folien, durch das Evapore-Verfahren, also ein Coextrusion-Evapore-Verfahren, ist bislang unbekannt.

Solche durch den Wet-Prozess oder das Evapore-Verfahren hergestellten Folien sind thermisch nur bedingt beständig und können bei hohen Temperaturen, wie sie im Versagensfall von Akkumulatoren auftreten können, ihre mechanische Integrität verlieren und zu Kurzschlüssen und anderen Versagensmodi führen. Die Akkumulator-(Batterie)-Separator-Folien werden daher bei Bedarf zur Erhöhung der Temperaturbeständigkeit mit einer porösen keramischen Beschichtung versehen.

Durch das Aufbringen einer keramischen Beschichtung, das heißt einer Beschichtung mit anorganischen Partikeln, sinkt die Ionenleitfähigkeit der Separator-Folien.. Durch die keramische Beschichtung kann die Ionenleitfähigkeit der Separator-Folien auf ein unzulässiges Niveau sinken, was es oft schwierig macht, eine Separator-Folie mit gleichzeitig genügender Temperaturbeständigkeit und ausreichender Ionenleitfähigkeit zu erhalten. Die Beschichtung von Separator-Folien mit anorganischen Partikeln zur Eigenschaftsverbesserung ist in US 6,432,586 beschrieben.

Die US 2009/117454 A1 beschreibt eine mehrschichtige mikroporöse Membran, umfassend mindestens eine erste mikroporöse Membranschicht und mindestens eine zweite mikroporöse Membranschicht in planarem Kontakt miteinander, wobei die erste mikroporöse Membranschicht ein erstes Polyethylen, ein erstes Polypropylen und ein davon verschiedenes zweites Polypropylen umfasst und wobei die zweite mikroporöse Membranschicht ein erstes Polyethylen und ein zweites Polyethylen umfasst, wobei die erste Schicht umfasst: (a) etwa 30 bis etwa 70 % des ersten Polyethylens mit einem Gewichtsmittel des Molekulargewichts von $2{,}5 \times 10^5$ bis $5 \times 10^5$ und eine Molekulargewichtsverteilung von 5 bis 100 aufweist, (b) etwa 20 bis etwa 40 % des ersten Polypropylens, mit einem Gewichtsmittel des Molekulargewichts von etwa $0{,}8 \times 10^6$ bis etwa $1{,}5 \times 10^6$, eine Molekulargewichtsverteilung von etwa 1 bis etwa 100 aufweist und (c) etwa 10 bis etwa 30 % des zweiten Polypropylens, mit einem Gewichtsmittel des Molekulargewichts von $4 \times 10^5$; bis $7{,}5 \times 10^5$, eine Molekulargewichtsverteilung von 5 bis 100 aufweisen und wobei die zweite Schicht (a) 60 bis 90 % des ersten Polyethylens umfasst, mit einem gewichtsmittleren Molekulargewicht von $2{,}5 \times 10^5$ bis $5 \times 10^5$ und eine Molekulargewichtsverteilung von 5 bis aufweist 100, und (a') von 10 bis 40 % eines zweiten Polyethylens, wobei das zweite Polyethylen ein gewichtsmittleres Molekulargewicht von etwa $1 \times 10^6$ bis $5 \times 10^6$ und eine Molekulargewichtsverteilung von 5 bis 100 aufweist und wobei das Dickenverhältnis der gesamten ersten zur gesamten zweiten mikroporösen Membranschicht im Bereich von 10/90 bis 75/25 liegt (siehe Anspruch 2).

Das Dokument US 2017/309883 A1 offenbart eine mehrlagige mikroporöse Membran welche sich aus mindestens zwei unterschiedlichen Lagen zusammensetzt (Anspruch 1) und als Separatorfilm für Batterien eingesetzt werden kann (Anspruch 3). Es werden Filme offenbart deren erste Lage 18 Gew.-% eines UHMWPE (Mw = 2.000.000 g/mol) und 82 Gew.-% eines HDPE (Mw = 350.000 g/mol) enthält (Beispiel 1). Die zweite Lage kann 57,5 Gew.-% eines HDPE (Mw = 300.000 g/mol), 17,5 Gew.-% eines UHMWPE (Mw = 2.000.000 g/mol) und 25 Gew.-% eines undefinierten LLDPE enthalten (Beispiel 1). Es wird die Verarbeitung durch Mischen von PE-Zusammensetzungen mittels Paraffin beschrieben (Beispiel 1) und die anschließende Coextrusion (Absatz [0239]). Die resultierende Folie wird biaxial verstreckt und mit Dichlormethan gewaschen und danach wärmebehandelt (Absatz [0241]). Die Porosität der erhaltenen Folien liegt bevorzugt zwischen 30-70 % (Absatz [0147]).

Die US 2017/151534 A1 mehrlagige mikroporöse Membranen (Anspruch 1) deren erste Lage 20 Gew.-% eines UHMWPE (Mw = 4.400.000 g/mol) und 80 Gew.-% eines HDPE (Mw = 300.000 g/mol) enthalten können (Beispiel 1). Die zweite Lage kann 5 Gew.-% eines UHMWPE (Mw = 4.400.000 g/mol) und 20 Gew.-% eines HDPE (Mw = 300.000 g/mol) enthalten (Beispiel 1). Die Verarbeitung erfolgt durch Mischen der PE-Zusammensetzungen mittels Paraffin (Beispiel 1) und anschließender Coextrusion (Absatz [0137]). Die resultierende Folie wird biaxial verstreckt und mit Dichlormethan gewaschen und danach wärmebehandelt (Absatz [0139]). Die Porosität der erhaltenen Folien liegt oberhalb von 70% (Tabelle 2).

EP 3 006 210 offenbart mehrlagige mikroporöse Membranen (Anspruch 1) deren erste Lage 25 Gew.-% eines UHMWPE (Mw = 2.000.000 g/mol) und 72 Gew.-% eines HDPE (Mw = 250.000 g/mol) enthalten können (Beispiel 1). Die zweite Lage kann 30 Gew.-% eines UHMWPE (Mw = 2.000.000 g/mol) und 70 Gew.-% eines HDPE (Mw = 250.000 g/mol) enthalten (Beispiel 1). Die Herstellung kann durch Mischen der PE Zusammensetzungen mittels Paraffin (Absatz [0125]) und anschließender Coextrusion (Absatz [0127]) erfolgen Anschließend kann biaxial verstreckt, gewaschen und wärmebehandelt (Absatz [0127]) werden. Die Porosität der Folien kann zwischen 40-50% (Tabelle 3) liegen.

## Aufgabe der Erfindung

Es war daher die Aufgabe der vorliegenden Erfindung, eine Separator-Folie für Batterien und Akkumulatoren zur Verfügung zu stellen, die verbesserte mechanische Eigenschaften aufweist, bei gleichzeitig akzeptabler Ionenleitfähigkeit beziehungsweise Permeabilität. Ferner sollten alle anderen vorstehend genannten Eigenschaften in zufriedenstellender Weise vorhanden sein, insbesondere soll die Beschichtung mit einer keramischen Schicht problemlos möglich sein und zu Folien mit ausreichender Ionenleitfähigkeit beziehungsweise zufriedenstellender Permeabilität führen. Ferner soll die Ionenleitfähigkeit der mit einer keramischen Schicht beschichteten Folie der Ionenleitfähigkeit der nicht mit einer keramischen Schicht beschichteten Folie möglichst ähnlich sein und die Folie soll bezüglich der Beschichtung auf verschiedenen Seiten der Folie möglichst ähnliche Eigenschaften aufweisen insbesondere in Hinblick auf die Änderung der Ionenleitfähigkeit beziehungsweise der Permeabilität.

## Beschreibung der Erfindung

Die vorliegende Erfindung betrifft eine biaxial orientierte Folie die zur Herstellung von Separator-Folien verwendet werden kann, die in Akkumulatoren oder Batterien Verwendung finden können. In der vorliegenden Beschreibung werden biaxial orientierte Folien als Folien bezeichnet, während nicht oder monoaxial orientierte Filme als Filme bezeichnet werden. Dies wird jedoch nicht strikt befolgt. Die Begriffe Film und Folie sind im Sinne der vorliegenden Erfindung als Synonyme zu verstehen.

Die vorliegende Erfindung betrifft eine biaxial orientierte Folie umfassend wenigstens eine Schicht (A) und wenigstens eine Schicht (B), wobei

Schicht (A) wenigstens ein erstes Polyethylen (PE-1) enthält und Schicht (B) wenigstens ein hochmolekulares Polyethylen (PE-H) enthält, welches wenigstens ein zweites Polyethylen (PE-2) umfasst und

wobei Schicht (A) wenigstens 50 Gewichtsprozent des wenigstens einen ersten Polyethylens (PE-1) bezogen auf das Gesamtgewicht der Schicht (A) enthält, Schicht (B) wenigstens 50 Gewichtsprozent des wenigstens einen hochmolekularen Polyethylens (PE-H) bezogen auf das Gesamtgewicht der Schicht (B) enthält und das wenigstens eine hochmolekulare Polyethylen (PE-H) wenigstens 50 Gewichtsprozent des wenigstens einen zweiten Polyethylens (PE-2) bezogen auf das Gesamtgewicht des wenigstens einen hochmolekularen Polyethylens (PE-H) enthält und

wobei das wenigstens eine erste Polyethylen (PE-1) ein gewichtsmittleres Molekulargewicht (Mw) im Bereich von 200.000 bis 600.000 g/mol aufweist, das wenigstens eine zweite Polyethylen (PE-2) ein gewichtsmittleres Molekulargewicht (Mw) im Bereich von 400.000 bis 1.500.000 g/mol aufweist und das wenigstens eine hochmolekulare Polyethylen (PE-H) und das wenigstens eine zweite Polyethylen (PE-2) jeweils ein gewichtsmittleres Molekulargewicht aufweisen, welches höher ist als das gewichtsmittlere Molekulargewicht des wenigstens einen ersten Polyethylens (PE-1) und wobei

die Folie eine Porosität im Bereich von 30 bis 70 % aufweist.

Unter den Begriff Polyethylen fallen dabei Homopolymere als auch Copolymere, die neben Ethylen bis zu 10 Gewichtsprozent alpha-Olefine enthalten, wobei die alpha-Olefine zum Beispiel aus der Gruppe bestehend aus Propen, 1-Buten und 1-Hexen ausgesucht sein können. Bevorzugt enthalten die alpha-Olefine jedoch keine aromatischen Gruppen. Monomere die Heteroatome enthalten sind ebenfalls nicht bevorzugt. Am meisten bevorzugt sind Homopolymere, daher wird bevorzugt für PE-1, PE-2 und PE-3 jeweils ein Polyethylen-Homopolymer verwendet. Die Polyethylene können ferner ausgesucht sein aus der Gruppe bestehend aus Polyethylen hoher Dichte (High-Density Polyethylen, HDPE), Polyethylen mittlerer Dichte (Medium-Density Polyethylen), verzweigtes Polyethylen geringer Dichte (Branched Low Density Polyethylen), hochmolekularem Polyethylen (High Molecular Weight Polyethylene, HMW-PE) und ultra hochmolekularem Polyethylen (Ultra High Molekular Weight Polyethylene, UHMW-PE). Am meisten bevorzugt wird für PE-1 HDPE (High-Density Polyethylen) verwendet und für PE-2 UHMWPE (Ultra High Molecular Weight Polyethylen).

Es zeigt sich überraschender Weise, dass die erfindungsgemäßen Batterie-Separator-Folien, verbesserte mechanische Eigenschaften aufweisen, ohne dass die weiteren Eigenschaften, insbesondere die elektrischen Eigenschaften, dabei in erheblichem Maße beeinträchtigt werden. Insbesondere kann die erfindungsgemäße Folie mit einer Beschichtung aus anorganischen Partikeln versehen werden, ohne dass die Ionenleitfähigkeit allzu stark beeinträchtigt wird.

Bevorzugt enthält Schicht (A) kein Polyethylen mit einem Molekulargewicht, das größer ist als das Molekulargewicht des ersten Polyethylens (PE-1). Ebenso bevorzugt enthält Schicht (A) kein Polypropylen.

Überraschender Weise haften die Schichten der erfindungsgemäßen Folien gut aneinander. Eine Ablösung der Schichten wurde nicht beobachtet. Ferner wird überraschender Weise die Ionenleitfähigkeit ohne keramische Beschichtung durch den Mehrschichten-Aufbau kaum beeinträchtig. Ferner stellt sich überraschender Weise heraus, dass die Ionenleitfähigkeit der Folie nicht über Gebühr beeinträchtigt wird, wenn auf Schicht (A) eine keramische Beschichtung aufgebracht wird.

Die erfindungsgemäße Folie hat daher verbesserte mechanische Eigenschaften und gleichzeitig eine gute Ionenleitfähigkeit nach Beschichtung mit einer keramischen Schicht.

Beide Schichten (A) und (B) der erfindungsgemäßen Folie weisen für eine Separator-Folie genügende physikalische Eigenschaften auf. Ferner weisen beide eine genügende Aufnahmefähigkeit für Flüssigkeiten auf, um als Reservoir für den Elektrolyten dienen zu können. Sie unterscheiden sich jedoch in ihren mechanischen Eigenschaften und in Ihrer Fähigkeit die Ionenleitfähigkeit nach Beschichtung mit einer keramischen Beschichtung aufrecht zu erhalten. Mehrschichtige Folien die nach dem Evapore-Verfahren hergestellt wurden sind bisher unbekannt.

Bevorzugt stellt Schicht (A) eine Außenschicht der Folie dar. Sie hat die zusätzliche Funktion, die Beschichtung der erfindungsgemäßen Folie zu ermöglichen, ohne dass dabei die Ionenleitfähigkeit der Folie zu stark verringert wird. Polymere mit geringerem Molekulargewicht erlauben die Beschichtung mit anorganischen Partikeln ohne dass dabei die Ionenleitfähigkeit zu stark sinkt.

Schicht (B) hat die Funktion, die mechanischen Eigenschaften der Folie zu stärken. Folien, die hochmolekulare Polyethylene enthalten weisen bessere mechanische Eigenschaften, wie zum Beispiel höhere Festigkeiten auf. Bevorzugt ist das gewichtsmittlere Molekulargewicht des zweiten Polyethylens (PE-2) wenigstens um 50.0000 g/mol höher als das gewichtsmittlere Molekulargewicht des ersten Polyethylens (PE-1), besonders bevorzugt um wenigstens 100.000 g/mol.

Die Angabe dass das wenigstens eine erste Polyethylen (PE-1) ein gewichtsmittleres Molekulargewicht (Mw) im Bereich von 200.000 bis 600.000 g/mol aufweist, das wenigstens eine zweite Polyethylen (PE-2) ein gewichtsmittleres Molekulargewicht (Mw) im Bereich von 400.000 bis 1.500.000 g/mol aufweist und das wenigstens eine zweite Polyethylen (PE-2) jeweils ein gewichtsmittleres Molekulargewicht aufweisen, welches höher ist als das gewichtsmittlere Molekulargewicht des wenigstens einen ersten Polyethylens (PE-1) ist in dem Bereich von 400.000 bis 600.000 g/mol so zu verstehen, dass wenn PE-1 ein Molekulargewicht in diesem Bereich aufweist, das Molekulargewicht von PE-2 größer sein muss als das Molekulargewicht von PE-1 und nicht mehr im dem Teilbereich von 400.000 bis 600.000 g/mol liegen darf, der gleich oder kleiner ist als das Molekulargewicht von PE-1 liegt.

Wenn mehrere Polyethylen PE-1 eingesetzt werden und/oder mehrere Polyethylen PE-2 eingesetzt werden, so gilt in der Regel für alle Polyethylene PE-2, dass sie ein höheres Molekulargewicht aufweisen als alle Polyethylene PE-1.

Bevorzugt beträgt die Gesamtmasse aller Schichten (A) 5 bis 50 Gewichtsprozent bezogen auf die gesamte Folie. Besonders bevorzugt beträgt die Masse aller Schichten (A) 10 bis 35 Gewichtsprozent bezogen auf die gesamte Folie und am meisten bevorzugt 15 bis 30 Gewichtsprozent. Die Gesamtmasse aller Schichten (B) beträgt bevorzugt 50 bis 95 Gewichtsprozent bezogen auf die gesamte Folie. Besonders bevorzugt beträgt die Gesamtmasse aller Schichten (B) 65 bis 90 Gewichtsprozent bezogen auf die gesamte Folie und am meisten bevorzugt 70 bis 85 Gewichtsprozent. Die Gesamtmasse aller Schichten (B) hat einen direkten Einfluss auf die mechanischen Eigenschaften der erfindungsgemäßen Folie. Ist der Anteil der Schicht (B) zu gering, so genügen die Folien den Ansprüchen an die mechanischen Eigenschaften oft nicht mehr. Ist der Anteil der Schicht (A) zu gering, so sinkt die Ionenleitfähigkeit unter Umständen bei Beschichtung mit einer keramischen Beschichtung zu stark. In den oben genannten Bereichen lassen sich die Eigenschaften der Folie durch die Anteile der Mengen der Schichten (A) und (B) an der gesamten Folie wie gewünscht einstellen und optimieren. Bevorzugt beträgt die Gesamtmasse aller Schichten (A) 5 bis 50 Gewichtsprozent und die Gesamtmasse aller Schichten (B) bevorzugt 50 bis 95 Gewichtsprozent jeweils bezogen auf die gesamte Folie. Besonders bevorzugt beträgt die Gesamtmasse aller Schichten (A) 10 bis 35 Gewichtsprozent und die Gesamtmasse aller Schichten (B) bevorzugt 65 bis 90 Gewichtsprozent jeweils bezogen auf die gesamte Folie. Am meisten bevorzugt beträgt die Gesamtmasse aller Schichten (A) 15 bis 30 Gewichtsprozent und die Gesamtmasse aller Schichten (B) 70 bis 85 Gewichtsprozent jeweils bezogen auf die gesamte Folie.

Bevorzugt enthält Schicht (A) wenigstens 80 Gewichtsprozent des wenigstens einen ersten Polyethylens (PE-1) bezogen auf das Gesamtgewicht der Schicht (A), besonders bevorzugt 95 Gewichtsprozent und am meisten bevorzugt besteht Schicht (A) aus dem wenigsten einen ersten Polyethylen. Bevorzugt enthält Schicht (B) wenigstens 80 Gewichtsprozent des wenigstens einen hochmolekularen Polyethylens (PE-H) bezogen auf das Gesamtgewicht der Schicht (B), besonders bevorzugt wenigstens 95 Gewichtsprozent und am meisten bevorzugt besteht Schicht (B) aus dem wenigstens einen hochmolekularen Polyethylens (PE-H). Bevorzugt enthält das wenigstens eine hochmolekulare Polyethylen (PE-H) wenigstens 80 Gewichtsprozent des wenigstens einen zweiten Polyethylens (PE-2) bezogen auf das Gesamtgewicht des wenigstens einen hochmolekularen Polyethylens (PE-H), besonders bevorzugt 95 Gewichtsprozent und am meisten bevorzugt besteht das wenigstens eine hochmolekulare Polyethylen (PE-H) aus dem wenigstens einen zweiten Polyethylen (PE-2). In einer besonders bevorzugten Ausführungsform besteht Schicht (A) aus dem wenigsten einen ersten Polyethylen und Schicht (B) aus dem wenigsten einen zweiten Polyethylen.

Bevorzugt bilden die Schichten (A) Außenschichten der Folie. Bei erfindungsgemäßen Folien mit zwei Außenschichten (A) beträgt die Gesamtmasse der Schichten (A) bevorzugt wenigstens 10 Gewichtsprozente bezogen auf die gesamte Folie.

Bevorzugt ist die erfindungsgemäße Folie dadurch gekennzeichnet, dass sie wenigstens zwei Schichten (A) und eine Schicht (B) umfasst, die in der Reihenfolge von A-B-A angeordnet sind. Wiederum bevorzugt ist die erfindungsgemäße Folie dadurch gekennzeichnet, dass wenigstens eine Schicht (A) eine Außenschicht der Folie bildet. Am meisten bevorzugt sind beide Außenschichten der erfindungsgemäßen Folie aus Schichten (A) gebildet.

Bevorzugt ist die erfindungsgemäße Folie dadurch gekennzeichnet, dass die Schichten (A) und (B) direkt miteinander verbunden sind. Dies ermöglicht es eine keramische Beschichtung auf beiden Seiten der Folie aufzubringen, um so die Temperaturbeständigkeit der Folie zu verbessern, ohne die Luftdurchlässigkeit zu negativ zu beeinflussen. Am meisten bevorzugt ist die erfindungsgemäße Folie dadurch gekennzeichnet, dass sie aus zwei Schichten (A) und einer Schicht (B) besteht, die in der Reihenfolge A-B-A angeordnet sind. Eine Solche Folie enthält keine weiteren Komponenten und ist daher leicht und preiswert herstellbar und die Dicke, Leitfähigkeit und andere Eigenschaften werden nicht durch zusätzliche Schichten beeinträchtigt.

Bevorzugt ist die erfindungsgemäße Folie dadurch gekennzeichnet, dass das erste Polyethylen (PE-1) ein gewichtsmittleres Molekulargewicht (Mw) im Bereich von 200.000 bis 450.000 g/mol aufweist und das zweite Polyethylen (PE-2) ein gewichtsmittleres Molekulargewicht (Mw) im Bereich von 500.000 bis 1.500.000 g/mol aufweist. Durch eine solche Zusammensetzung kann im besonderen Maße erreicht werden, dass einerseits die Ionenleitfähigkeit nach dem Beschichten der Schicht (A), beziehungsweise der Schichten (A), mit einer keramischen Beschichtung nur geringfügig beeinträchtigt ist und andererseits, die Folie durch die Schicht (B) genügende mechanische Eigenschaften verliehen bekommt.

Die Schichten (A) und (B) der erfindungsgemäßen Folie können jeweils zusätzlich zu dem ersten Polyethylen (PE-1) beziehungsweise dem zweiten Polyethylen (PE-2) und dem dritten Polyethylen (PE-3) Additive enthalten. Die Additive können zum Beispiel ausgesucht sein aus der Gruppe bestehend aus Polymeren, Füllstoffen, insbesondere solche die Nanopartikel enthalten, Thermostabilisatoren, Antistatika, Färbemittel, Antioxidantien und Stabilisatoren.

Solche Additive können die Folieneigenschaften verbessern. Die Polymere können zum Beispiel ausgesucht werden aus der Gruppe bestehend aus Polypropylen und Polybutylen. Die Polymere können eingesetzt werden um die mechanischen und thermischen Festigkeiten der Folie zu verbessern. Die Schichten (A) und (B) können jeweils bis zu 50 Gewichtsprozent Additive bezogen auf das Gesamtgewicht der jeweiligen Schicht umfassen. Mit Ausnahme der Füllstoffe und den Polymeren sind diese jedoch bevorzugt in einer Menge 20 Gewichtsprozent oder weniger und besonders bevorzugt in einer Menge von 10 Gewichtsprozent oder weniger enthalten. Besonders bevorzugt ist eine erfindungsgemäße Folie, in der wenigstens eine Schicht (A) bis zu 50 Gewichtsprozent ganz besonders bevorzugt bis zu 30 Gewichtsprozent Füllstoffe bezogen auf das Gesamtgewicht dieser Schicht (A) enthält. Ganz besonders bevorzugt ist eine erfindungsgemäße Folie, in der alle Schichten (A) bis zu 50 Gewichtsprozent ganz besonders bevorzugt bis zu 30 Gewichtsprozent Füllstoffe bezogen auf das Gesamtgewicht der jeweiligen Schicht (A) enthält.

Bevorzugt ist die erfindungsgemäße Folie dadurch gekennzeichnet, dass das wenigstens eine hochmolekulare Polyethylen (PE-H) der Schicht (B) der erfindungsgemäßen Folie wenigstens ein drittes Polyethylen (PE-3) enthält, das ein höheres mittleres Molekulargewicht aufweist als das zweite Polyethylen (PE-2). Hierdurch können die mechanischen Eigenschaften der Folie weiter gezielt beeinflusst werden. Ferner ist es bevorzugt, dass das dritte Polyethylen (PE-3) ein gewichtsmittleres Molekulargewicht (Mw) im Bereich von 1.000.000 bis 6.000.000 g/mol aufweist. Bevorzugt ist das gewichtsmittlere Molekulargewicht des dritten Polyethylens (PE-3) wenigstens um 100.0000 g/mol höher als das gewichtsmittlere Molekulargewicht des zweiten Polyethylens (PE-2), besonders bevorzugt um wenigstens 200.000 g/mol.

Ferner ist die erfindungsgemäße Folie bevorzugt dadurch gekennzeichnet, dass das erste Polyethylen (PE-1) ein gewichtsmittleres Molekulargewicht (Mw) im Bereich von 200.000 bis 450.000 g/mol aufweist und das zweite Polyethylen (PE-2) ein gewichtsmittleres Molekulargewicht (Mw) im Bereich von 500.000 bis 900.000 g/mol aufweist. Dies gilt insbesondere für Folien, die PE-3 in Schicht (B) enthalten. Am meisten bevorzugt ist die erfindungsgemäße Folie dadurch gekennzeichnet, dass das erste Polyethylen (PE-1) ein gewichtsmittleres Molekulargewicht (Mw) im Bereich von 200.000 bis 450.000 g/mol aufweist und das zweite Polyethylen (PE-2) ein gewichtsmittleres Molekulargewicht (Mw) im Bereich von 500.000 bis 900.000 g/mol aufweist und dritte Polyethylen (PE-3) ein gewichtsmittleres Molekulargewicht (Mw) im Bereich von 1.000.000 bis 6.000.000 g/mol g/mol aufweist. Das dritte Polyethylen wird bevorzugt eingesetzt in einer Menge von bis zu 50 Gewichtsprozent, besonders bevorzugt in einer Menge im Bereich von 1 bis 30 Gewichtsprozent und am meisten bevorzugt in einer Menge im Bereich von 5 bis 25 Gewichtsprozent bezogen auf die Gesamtmasse des wenigstens einen hochmolekularen Polyethylens (PE-H).

Die Beimischung von Füllstoffen zu der erfindungsgemäßen Folie stellt eine interessante Option dar, um die Porosität und andere Eigenschaften der Schichten der Folie gezielt einzustellen. Bevorzugt werden als Füllstoffe Nanopartikel eingesetzt. Unter Nanopartikeln werden im Sinne dieser Erfindung Partikel mit einer Teilchengröße von 1 $\mu$m oder weniger verstanden, wobei die Messung von Teilchengrößen durch Laserbeugungs-Partikelgrößenanalyse erfolgt. Nanopartikel können durch Bildung von Kavitäten in der Polymermatrix den Porenbildungsprozess beim Strecken unterstützen und eine offenporige Oberfläche erzeugen. Füllstoffe und insbesondere Füllstoffe in Form von Nanopartikeln können zum Beispiel ausgesucht sein aus der Gruppe bestehend aus $CaCO_3$, $Al_2O_3$, AlOOH $SiO_2$ und Mullit. Besonders bevorzugt ist AlOOH.

Antistatika vermindern die Tendenz zur statischen Aufladung und Funkenbildung, verbessern so den Explosionsschutz und sind hilfreich zur Sicherstellung eines sicheren Betriebs der Anlage.

Die erfindungsgemäße Folie kann Füllstoffe enthalten, muss aber keine Füllstoffe enthalten. Wenn die erfindungsgemäße Folie Füllstoffe enthält, enthält sie bevorzugt bis zu 50 Gewichtsprozent Füllstoffe und besonders bevorzugt 10 bis 50 Gewichtsprozent Füllstoffe, jeweils bezogen auf das Gewicht der gesamten Folie. Insbesondere bevorzugt enthält die erfindungsgemäße Folie bis zu 50 Gewichtsprozent Nanopartikel und am meisten bevorzugt enthält sie 10 bis 50 Gewichtsprozent Nanopartikel, jeweils bezogen auf das Gesamtgewicht der gesamten Folie.

Besonders bevorzugt enthält die erfindungsgemäße Folie bis zu 50 Gewichtsprozent Füllstoffe in der Schicht (A), bezogen auf das Gesamtgewicht der Schicht (A), ganz besonders bevorzugt 10 bis 50 Gewichtsprozent. Ganz besonders bevorzugt enthält die erfindungsgemäße Folie bis zu 50 Gewichtsprozent Nanopartikel in der Schicht (A), bezogen auf das Gesamtgewicht der Schicht (A), ganz besonders bevorzugt 10 bis 50 Gewichtsprozent.

Bei der erfindungsgemäßen Folie kann sowohl Schicht (A) als auch Schicht (B) eine Porosität im Bereich von 30 bis 70 % aufweisen und die Porosität von Schicht (A) und die Porosität von Schicht (B) gleich oder verschieden sein. Bevorzugt ist die Porosität von Schicht (B) geringer als die von Schicht (A), weil dies die mechanischen Eigenschaften der Schicht (B) und der Folie insgesamt verbessert. Besonders bevorzugt ist die Porosität der Schicht (B) um wenigstens 5 % geringer als die Porosität der Schicht (A) und am meisten bevorzugt ist die Porosität der Schicht (B) um wenigstens 8 % geringer als die Porosität der Schicht (B).

Besonders bevorzugt liegt die Porosität der erfindungsgemäßen Folie insgesamt im Bereich von 35 bis 60 %, ganz besonders bevorzugt im Bereich von 40 bis 60 % und am meisten bevorzugt im Bereich von 40 bis 55 %. Eine solche Porosität erlaubt ein angemessenes Gleichgewicht zwischen der mechanischen Festigkeit der Folie auf der einen Seite und der Aufnahmefähigkeit für den Elektrolyten, der ionischen Leitfähigkeit und der Luftdurchlässigkeit auf der anderen Seite. Die Porosität der Schicht (A) der erfindungsgemäßen Folie liegt dabei bevorzugt in einem Bereich von 35 bis 70 %, besonders bevorzugt in einem Bereich von 40 bis 60 %, ganz besonders bevorzugt in einem Bereich von 40 bis 60 % und am meisten bevorzugt in einem Bereich von 40 bis 55 %. Die Porosität der Schicht (B) der erfindungsgemäßen Folie liegt dabei bevorzugt in einem Bereich von 30 bis 65 %, besonders bevorzugt in einem Bereich von 35 bis 55 %, ganz besonders bevorzugt in einem Bereich von 40 bis 55 % und am meisten bevorzugt in einem Bereich von 40 bis 50 %.

Ferner bevorzugt sind erfindungsgemäße Folien, in denen die Porosität der Schicht (A) der erfindungsgemäßen Folie in einem Bereich von 35 bis 70 % liegt und die Porosität der Schicht (B) der erfindungsgemäßen Folie in einem Bereich von 30 bis 65 % liegt und die Porosität der Schicht (B) um wenigstens 5 % geringer ist als die Porosität der Folie (A). Besonders bevorzugt sind erfindungsgemäße Folien, in denen die Porosität der Schicht (A) der erfindungsgemäßen Folie in einem Bereich von 40 bis 60 % liegt und die Porosität der Schicht (B) der erfindungsgemäßen Folie in einem Bereich von 35 bis 55 % liegt und die Porosität der Schicht (B) um wenigstens 5 % geringer ist als die Porosität der Folie (A). Ganz besonders bevorzugt sind erfindungsgemäße Folien, in denen die Porosität der Schicht (A) der erfindungsgemäßen Folie in einem Bereich von 45 bis 60 % liegt und die Porosität der Schicht (B) der erfindungsgemäßen Folie in einem Bereich von 40 bis 55 % liegt und die Porosität der Schicht (B) um wenigstens 5 % geringer ist als die Porosität der Folie (A). Am meisten bevorzugt sind erfindungsgemäße Folien, in denen die Porosität der Schicht (A) der erfindungsgemäßen Folie in einem Bereich von 45 bis 55 % liegt und die Porosität der Schicht (B) der erfindungsgemäßen Folie in einem Bereich von 40 bis 50 % liegt und die Porosität der Schicht (B) um wenigstens 5 % geringer ist als die Porosität der Folie (A). Schließlich sind unter den vorgenannten erfindungsgemäßen Ausführungsformen diese bevorzugt, in denen die Porosität der Schicht (B) um wenigstens 8 % geringer ist als die Porosität der Folie (A).

Die Dicke der erfindungsgemäßen Folie liegt üblicherweise in einem Bereich von 3 bis 50 $\mu$m, bevorzugt in einem Bereich von 5 bis 30 $\mu$m, besonders bevorzugt in einem Bereich von 5 bis 20 $\mu$m. Am meisten bevorzugt liegt die Dicke der erfindungsgemäßen Folien im Bereich von 5 bis 16 $\mu$m. Folien mit geringen Dicken sind preiswert und leicht. Ist die Dicke zu gering, so sind die mechanischen Eigenschaften und damit auch die Verarbeitbarkeit ungenügend. Ist sie zu hoch, so ist ebenfalls die Verarbeitbarkeit bei der Herstellung und Weiterverarbeitung unzureichend.

In der Regel liegt der Anteil der Dicke aller Schichten (A) der erfindungsgemäßen Folie im Bereich von 5 bis 50 % und der Anteil aller Schichten (B) im Bereich von 50 bis 95 % jeweils bezogen auf die Gesamtdicke der Schichten (A) und (B) der Folie. Besonders bevorzugt liegt der Anteil der Dicke aller Schichten (A) der erfindungsgemäßen Folie im Bereich von 10 bis 35 % und der Anteil aller Schichten (B) im Bereich von 65 bis 90 %. Ganz besonders bevorzugt liegt der Anteil der Dicke aller Schichten (A) der erfindungsgemäßen Folie im Bereich von 15 bis 30% und der Anteil aller Schichten (B) im Bereich von 70 bis 85%. In Folien mit solchen Anteilen an können beide Schichten Ihre Aufgaben in befriedigender Weise erfüllen. Schicht (B) verleiht der Folie gute mechanische Eigenschaften und Schicht (A) erlaubt eine Beschichtung der Folien mit anorganischen Partikeln ohne die Ionenleitfähigkeit allzu stark zu beeinträchtigen.

In einer ganz besonders bevorzugten Ausführungsform der erfindungsgemäßen Folie handelt es sich um eine Folie, die dadurch gekennzeichnet ist, dass wenigstens eine Schicht (A) eine Außenschicht der Folie bildet, die Schicht (B) wenigstens 80 Gewichtsprozent des wenigstens einen hochmolekularen Polyethylens (PE-H) bezogen auf das Gesamtgewicht der Schicht (B) enthält, die Gesamtmasse aller Schichten (A) 5 bis 50 Gewichtsprozent beträgt und die Gesamtmasse aller Schichten (B) 50 bis 95 Gewichtsprozent jeweils bezogen auf die gesamte Folie beträgt und die Dicke der Folie in einem Bereich von 3 bis 50 $\mu$m liegt.

In einer ganz besonders bevorzugten Ausführungsform der erfindungsgemäßen Folie handelt es sich um eine Folie, die dadurch gekennzeichnet ist, dass wenigstens eine Schicht (A) eine Außenschicht der Folie bildet, die Schicht (B) wenigstens 80 Gewichtsprozent des wenigstens einen hochmolekularen Polyethylens (PE-H) bezogen auf das Gesamtgewicht der Schicht (B) enthält, die Gesamtmasse aller Schichten (A) 10 bis 35 Gewichtsprozent beträgt und die Gesamtmasse aller Schichten (B) 65 bis 90 Gewichtsprozent jeweils bezogen auf die gesamte Folie beträgt und die Dicke der Folie in einem Bereich von 3 bis 50 $\mu$m liegt.

Besonders bevorzugt ist die erfindungsgemäße Folie dadurch gekennzeichnet, dass sie wenigstens eine keramische Beschichtung aufweist, die direkt mit der Oberfläche wenigstens einer Schicht (A) verbunden ist. Am meisten bevorzugt besteht die erfindungsgemäße Folie aus zwei Schichten (A) und einer Schicht (B), wobei die Schichten in der Reihenfolge A-B-A angeordnet sind, wobei die Schichten (A) die Außenschichten der Folie bilden und ist dadurch gekennzeichnet, dass beide Schichten (A) eine keramische Beschichtung aufweisen, die direkt mit den Oberflächen der Schichten (A) verbunden sind. Solche keramischen Schichten sind geeignet in einem Akkumulator, in dem die Folien verwendet werden um die Kathode und die Anode voneinander zu trennen, ein Durchwachsen metallischer Dendriten, die zu einem Kurzschluss führen können, zu verhindern.

Im Sinne dieser Patentanmeldung ist eine keramische Beschichtung eine Beschichtung mit keramischen Partikeln. Bevorzugte Beschichtungen sind in der US 6,432,586 B1 beschrieben. Alle dort offenbarten Beschichtungen sind für die vorliegende Erfindung geeignet. Besonders bevorzugt sind Beschichtungen, die anorganische Partikel in einem Matrixmaterial enthalten. Bei dem Matrixmaterial kann es sich zum Beispiel um Polymere und/oder Bindemittel handeln. Die Teilchengröße der anorganischen Partikel ist bevorzugt im Bereich von 0.005 bis 10 $\mu$m und besonders bevorzugt im Bereich von 0.05 bis 3 $\mu$m gemessen durch eine Laserbeugungsmethode. Die anorganischen Partikel sind bevorzugt ausgewählt aus der Gruppe bestehend aus $SiO_2$, $Al_2O_3$, $CaCO_3$, $TiO_2$, $SiS_2$ und $SiPO_4$. Besonders bevorzugt sind sie ausgewählt aus der Gruppe bestehend aus $SiO_2$, $Al_2O_3$ und $CaCO_3$. Das Matrixmaterial ist bevorzugt ausgesucht aus der Gruppe bestehend aus Polyethylenoxid, Polyvinylidenfluorid, Polytetrafluorethylen, Polyurethan, Polyacrylnitril, Polymethylmethacrylat, Polytetraethylenglykoldiacrylat, Copolymere davon und Mischungen davon. Besonders bevorzugt ist das Matrixmaterial ausgesucht aus der Gruppe bestehend aus Polyacrylat-Polymer oder Polyvinylidenfluorid, Copolymere davon und Mischungen davon. Die erfindungsgemäßen Beschichtungen enthalten bevorzugt zwischen 20 bis 95 Gewichtsprozent der anorganischen Partikel und 5 bis 80 Gewichtsprozent des Matrixmaterials. Die Dicke der keramischen Schicht liegt bevorzugt im Bereich von 0.05 bis 10 $\mu$m und besonders bevorzugt im Bereich von 0.5 bis 5 pm, noch mehr bevorzugt im Bereich von 1 bis 5 $\mu$m und am meisten bevorzugt im Bereich von 2 bis 4 $\mu$m.

In einer besonders bevorzugten Ausführungsform weist die Beschichtung eine Schichtdicke von 0,5 bis 5 $\mu$m auf und die Teilchengröße der anorganischen Partikel ist im Bereich von 0,05 bis 3 $\mu$m. In einer ganz besonders bevorzugten Ausführungsform ist weist die Beschichtung eine Schichtdicke von 0,5 bis 5 $\mu$m auf, die Teilchengröße der anorganischen Partikel ist im Bereich von 0,05 bis 3 pm, die anorganischen Partikel sind ausgewählt aus der Gruppe bestehend aus $SiO_2$, $Al_2O_3$, $CaCO_3$, $TiO_2$, $SiS_2$ und $SiPO_4$ und das Matrixmaterial ist ausgesucht aus der Gruppe bestehend aus Polyethylenoxid, Polyvinylidenfluorid, Polytetrafluorethylen, Polyurethan, Polyacrylnitril, Polymethylmethacrylat, Polytetraethylenglykoldiacrylat, Copolymere und Mischungen davon.

Die keramischen Schichten verhindern ein Durchwachsen von Dendriten, setzen aber auch die Ionenleitfähigkeit der Separator-Folien herab.

Die erfindungsgemäßen Folien zeichnen sich dadurch aus, dass die Beschichtung der Schicht (A) mit einer keramischen Schicht nur zu einer sehr geringen Reduzierung der Ionenleitfähigkeit der erfindungsgemäßen Folie führt. Als Maß für die Ionenleitfähigkeit kann die Luftdurchlässigkeit dienen. Bevorzugt sind erfindungsgemäße Folien, in denen die Abnahme der Luftdurchlässigkeit bei einseitiger Beschichtung (DA) kleiner oder gleich 100 s/100ml, besonders bevorzugt kleiner oder gleich 50 s/100ml und am meisten bevorzugt kleiner oder gleich 25 s/100ml beträgt, wobei

L0:     Luftdurchlässigkeit der Folie ohne Beschichtung in s/100ml

L1:     Luftdurchlässigkeit der einseitig auf einer Schicht (A) beschichteten Folie in s/100ml

DA:     Absoluter Wert der Differenz L1-L0 (DA = L1-L0)

Anders ausgedrückt beträgt die Differenz (DA) zwischen der Luftdurchlässigkeit der erfindungsgemäßen Folie ohne Beschichtung (L0) und der Luftdurchlässigkeit der erfindungsgemäßen Folie mit nur einer Beschichtung auf einer Schicht (A) mit einer keramischen Schicht (L1) bevorzugt 50 s/100ml oder weniger, besonders bevorzugt 30 s/100ml oder weniger. Dabei nimmt die Permeabilität der Folie durch die Beschichtung ab.

Ferner sind bei erfindungsgemäßen Folien, bei denen beide Oberflächen von einer Schicht (A) gebildet werden beide Seiten der Folie in etwa gleichermaßen zur Beschichtung mit einer keramischen Schicht geeignet. Das heißt die Beschichtung auf der einen Seite der Folie führt zu einer in etwa gleichen Reduktion DA der Ionenleitfähigkeit beziehungsweise Permeabilität wie das Beschichten der anderen Seite der Folie (DB). Dies ist eine wichtige Eigenschaft, die es ermöglicht, dieselbe Folie sowohl zur Herstellung von einseitig beschichteten Folie zu verwenden als auch zur Beschichtung von zweiseitig beschichteten Folien.

Bevorzugt sind erfindungsgemäße Folien, die dadurch gekennzeichnet sind, dass die Differenz D der Abnahmen der Luftdurchlässigkeiten kleiner oder gleich 25 s/100ml, besonders bevorzugt kleiner oder gleich 15 s/100ml beträgt, wobei

L0, L1 und DA wie vorstehend definiert.

L2:     Luftdurchlässigkeit der einseitig beschichteten Folie, die auf der anderen Seite der Folie als bei L1 beschichtet ist in s/100ml.

DB:     Absoluter Wert der Differenz L2-L0 (DB = L2-L0)

D:      Absoluter Wert der Differenz DA-DB (D = |DA-DB|)

Bevorzugt sind anders ausgedrückt erfindungsgemäße Folien, bei denen die Differenz (D) in der Reduktion der Luftdurchlässigkeit bei Beschichtung der einen Seite der erfindungsgemäßen Folie (DA) mit einer keramischen Schicht und der Reduktion der Luftdurchlässigkeit bei Beschichtung der anderen Seite der erfindungsgemäßen Folie mit einer keramischen Schicht (DB) nicht mehr als 25 s/100ml beträgt, besonders bevorzugt nicht mehr als 15 s/100ml. Diese Eigenschaft weisen Folien, die nur aus einer Schicht (B) bestehen, überraschender Weise nicht auf.

Die geringe Reduktion der Luftdurchlässigkeit und der geringe Unterschied bei der Beschichtung auf den verschiedenen Seiten der Folie sind eine Folge des mehrschichtigen Aufbaus der Folie und den unterschiedlichen Molekulargewichten der Polyethylene PE-1 auf der einen Seite und PE-2 und PE-3 auf der anderen Seite.

Ganz besonders geeignet für die gewerbliche Nutzung sind erfindungsgemäße Folien, bei denen DA kleiner oder gleich 100 s/100ml und D kleiner oder gleich 50 s/100ml beträgt und am meisten geeignet sind erfindungsgemäße Folien, bei denen DA kleiner oder gleich 50 s/100ml und D kleiner oder gleich 25 s/100ml beträgt.

Ein weiterer Aspekt der vorliegenden Erfindung ist eine Batterie Separator Folie (BSF) umfassend eine erfindungsgemäße Folie wie hierin beschrieben.

Ebenfalls ein weiterer Aspekt der vorliegenden Erfindung ist eine Lithiumionenbatterie umfassend eine erfindungsgemäße Folie wie hierin beschrieben.

Ein weiter Aspekt der vorliegenden Erfindung betrifft ein Verfahren zur Herstellung der erfindungsgemäßen biaxial orientierten Folie. Demgemäß betrifft die vorliegende Erfindung ein Verfahren zur Herstellung einer erfindungsgemäßen Folie, umfassend die Schritte:

- Bereitstellen eines ersten Polyethylens (PE-1), welches ein gewichtsmittleres Molekulargewicht (Mw) im Bereich von 200.000 bis 600.000 g/mol aufweist,

- Bereitstellen eines zweiten Polyethylens (PE-2), welches ein gewichtsmittleres Molekulargewicht (Mw) von 400.000 bis 1.500.000 g/mol, wobei das gewichtsmittlere Molekulargewicht des zweiten Polyethylens (PE-2) höher ist als das des ersten Polyethylens (PE-1),

- Bereitstellen eines ersten Fluids (Fluid 1) mit einem Siedepunkt von 135 bis 300 °C,

- Bereitstellen eines zweiten Fluids (Fluid 2) mit einem Siedepunkt von 135 bis 300 °C,

- Schmelzen des ersten Polyethylens (PE-1) und mischen des ersten Fluids (Fluid 1) mit dem geschmolzenen ersten Polyethylen (PE-1), um eine erste Mischung zu erhalten, die 30 bis 70 Gewichtsprozent des ersten Fluids (Fluid 1) umfasst, bezogen auf die gesamte Masse der ersten Mischung,

- Schmelzen des zweiten Polyethylens (PE-2) und mischen des zweiten Fluids (Fluid 2) mit dem geschmolzenen zweiten Polyethylen (PE-2), um eine zweite Mischung zu erhalten, die 30 bis 70 Gewichtsprozent des zweiten Fluids (Fluid 2) umfasst, bezogen auf die gesamte Masse der zweiten Mischung,

- Co-Extrudieren der so erhaltenen Mischungen mittels einer Mehrfach-Breitschlitz-Düse unter Herstellung einer mehrschichtigen Schmelze, wobei die erste Mischung wenigstens eine Schicht (A) und die zweite Mischung wenigstens eine Schicht (B) ausbildet,

- Kühlen der so entstandenen mehrschichtigen Schmelze zu einem Film (Castfilm),

- Verstrecken des so entstandenen Films in Längsrichtung (MD),

- Durchführen einer Wärmebehandlung (Annealing),

- Verstrecken des so erhaltenen in Längsrichtung gestreckten Films in Querrichtung (TD),

- Durchführen einer Wärmebehandlung (Annealing), wobei die in der Folie noch enthaltenen Fluide in die Gasphase übergehen,

wobei es sich bei den Fluiden 1 und 2 um organische Flüssigkeiten handelt, nämlich

a) um organische Flüssigkeiten, die keine Heteroatome oder außer Sauerstoff keine Heteroatome umfassen und keine aromatischen Gruppen enthalten, und/oder

b) um Alkane oder Gemische davon.

Das erfindungsgemäße Verfahren ist eine Weiterentwicklung des Evapore-Verfahrens.

Im vorliegenden Verfahren können zwei voneinander unabhängige Extruder zur Aufschmelzung und Homogenisierung von zwei verschiedenen Rezepturen verwendet werden. Zum Schmelzen und Extrudieren der Polymeren können jeweils zum Beispiel Einschneckenextruder oder Doppelschneckenextruder verwendet werden. Bevorzugt werden Doppelschneckenextruder verwendet. Ein Extruder (Extruder A) kann für die Herstellung der homogenen Mischung für Schicht (A) basierend auf PE-1 verwendet werden und ein zweiter Extruder (Extruder B) kann für die Herstellung der homogenen Mischung für Schicht (B) basierend auf PE-2 verwendet werden.

Extruder A wird dabei mit PE-1, Fluid 1 und gegebenenfalls mit Additiven beaufschlagt. Die Dosierung des Polymers kann mit Hilfe von Dosierwaagen erfolgen. Die Dosierung des Fluids erfolgt bevorzugt über Einspritzventile direkt in den Extruder an einer Position an der das Polymer bereits aufgeschmolzen ist. Fluid 1 und Polymer werden dann zu einer einphasigen Schmelze vermischt. Dies kann in der weiteren Extruderstrecke erfolgen.

Der verwendete Extruder B wird mit pulverförmigen PE-2, Fluid 2 und gegebenenfalls mit Additiven beaufschlagt. Im Übrigen wird wie beim Extruder A verfahren.

Die Schmelzen aus Extruder A und Extruder B werden bevorzugt in Mehrfach-Breitschlitz-Düsen zu einem Schichtaufbau zusammengeführt. Im Falle der Herstellung einer Folie mit einer A-B-A Struktur werden die Schmelzen bevorzugt in einer Dreifach-Breitschlitz-Düse zu einer AB-A Struktur zusammengeführt.

Die Temperatur der Schmelze liegt beim Austritt aus der Düse bevorzugt in einem Bereich von 120 bis 210 °C und besonders bevorzugt im Bereich von 150-190°C.

Die aus der Düse austretende Schmelze wird in bekannter Weise abgekühlt und verfestigt, hierdurch entsteht der sogenannte Castfilm. Die Abkühlung kann erfolgen durch ein Mittel ausgesucht aus der Gruppe bestehend aus wenigstens einer gekühlten Walze und wenigstens einem Wasserbad oder eine Kombination daraus. Insbesondere bevorzugt ist eine Kombination von einer oder mehreren gekühlten Walzen und einem Wasserbad Die Temperaturen der Walze(n) und des Wasserbades liegen bevorzugt im Bereich von 10 bis 80 °C. Statt eines Wasserbades kann auch jede andere Flüssigkeit verwendet werden, die zum Kühlen der Folie geeignet ist. Auch das erste Fluid (Fluid 1) und das zweite Fluid 2 (Fluid 2) können als Kühlflüssigkeiten verwendet werden. In diesem Fall sollten genügende Brand- und Explosionsschutzmaßnahmen getroffen werden.

Die Abzugsgeschwindigkeit liegt bevorzugt im Bereich von 4 bis 10 m/min und bei kleineren Anlagen im Bereich von 1 bis 5 m/min. Die Dicke der hergestellten Folie hat nach Abkühlen bevorzugt im Bereich von 400 bis 800 $\mu$m. Nach dem Abkühlen liegen wenigstens 50 Gewichtsprozent der ursprünglich eingesetzten Fluide weiterhin in der Folie vor.

Das Anlegen der Schmelze auf die Kühlwalze kann durch ein sogenanntes Air-Knife unterstützt werden. Bevorzugt liegt die Dicke des Castfilms im Bereich von 400-800 $\mu$m.

Die vorstehend für die erfindungsgemäße Folie genannten Werte für die Molekulargewichte der Polyethylene gelten auch für das erfindungsgemäße Verfahren. Wenn ein drittes Polyethylen (PE-3) verwendet wird, wird dieses gemeinsam mit dem zweiten Polyethylen geschmolzen und die so entstandene Mischung wird mit dem zweiten Fluid gemischt. Wenn Additive verwendet werden, werden diese gemeinsam mit dem ersten Polyethylen und/oder gemeinsam mit dem zweiten Polyethylen geschmolzen und die so entstandene Mischung wird mit dem entsprechenden Fluid gemischt.

Bevorzugt werden im erfindungsgemäßen Verfahren Polyethylene eingesetzt, die eine Kristallinität von mindestens 30 % aufweisen. Dies gilt sowohl für das erste Polyethylen (PE-1), das zweite Polyethylen (PE-2) und soweit dies eingesetzt wird, als auch für das dritte Polyethylen (PE-3).

Die Fluide sind bevorzugt Flüssigkeiten unter Normalbedingungen, also bei 25 °C und 1013 hPa. Sie weisen bevorzugt einen Siedepunkt in Bereich von 100 bis 300 °C auf und besonders bevorzugt im Bereich von 150 bis 250 °C. Ferner weisen die Fluide bevorzugt einen Dampfdruck im Bereich von 1 bis 50 mm Hg (133 bis 6666 Pa) bei 70°C auf. Dies erleichtert es, die Fluide während der Herstellung der Folie zu verdampfen. Bevorzugt handelt es sich bei den Fluiden um organische Flüssigkeiten, die außer Sauerstoff keine Heteroatome umfassen und keine aromatischen Gruppen enthalten. Am meisten bevorzugt handelt es sich um Alkane oder Gemische davon. Bei Alkanen handelt es sich bekanntermaßen um Kohlenwasserstoffe, die nur aus den beiden Elementen Kohlenstoff (C) und Wasserstoff (H) bestehen, also keinen Sauerstoff umfassen. Wenn die Fluide keine Siedepunkte, sondern Siedebereiche aufweisen, wird für die vorliegende Anmeldung angenommen, dass das obere Ende (die höchste Temperatur) des Siedebereichs der Siedepunkt des Fluids ist. Bevorzugt wird für Fluid 1 und Fluid 2 dasselbe Fluid verwendet.

Die Folie wird an sich bekannter Weise monoaxial in Längsrichtung (MD) gestreckt. Das Gesamtstreckverhältnis in Längsrichtung liegt zwischen 5 und 9 und das Verstrecken kann in einem oder mehreren Schritten erfolgen. Die Strecktemperatur liegt bevorzugt im Bereich von 80 und 125 °C und besonders bevorzugt im Bereich von 95 bis 110 °C. Anschließend an das Verstrecken in Längsrichtung wird eine Wärmebehandlung durchgeführt. Die Temperatur bei der Wärmebehandlung (Annealing) liegt bevorzugt im Bereich von 85 bis 125 °C und besonders bevorzugt im Bereich von 100 und 110 °C. Die Dicke der in Längsrichtung verstreckten Folie liegt bevorzugt im Bereich von 50 und 150 $\mu$m.

Es ist ferner bevorzugt, dass die Folie nach dem Recken in Längsrichtung und der sich daran anschließenden Wärmebehandlung noch mehr als 50 Gewichtsprozent der ursprünglich eingesetzten Gesamtmasse des ersten und zweiten Fluids enthält.

Ferner ist es bevorzugt, dass bei der Wärmebehandlung nach der Verstreckung in Längsrichtung eine Relaxierung der Folie im Umfang von bis zu 5% des Streckverhältnisses in Längsrichtung durchgeführt wird. Dabei wird zum Beispiel bei einem Streckverhältnis in Längsrichtung von 7 und einer Relaxierung von 5% die Folie in Längsrichtung so relaxiert, dass das Streckverhältnis in Längsrichtung auf 7 - (7 * 0,05) = 7 - 0,35 = 6,65 sinkt.

Die Folie wird an sich bekannter Weise monoaxial in Querrichtung (TD) gereckt. Das Streckverhältnis liegt bevorzugt im Bereich von 5 und 9. Die Temperatur beim Verstrecken in Querrichtung liegt bevorzugt im Bereich von 50 bis 150 °C und besonders bevorzugt im Bereich von 50 bis 90 °C. Nach dem Strecken wird die Folie einer Wärmebehandlung unterzogen, relaxiert und thermofixiert.

Ferner ist es bevorzugt, dass bei der Wärmebehandlung nach der Verstreckung in Längsrichtung eine Relaxierung der Folie im Umfang von 5 bis 10% des Streckverhältnisses in Querrichtung durchgeführt wird. Dabei wird zum Beispiel bei einem Streckverhältnis in Querrichtung von 7 und einer Relaxierung von 10% die Folie in Querrichtung so Relaxiert, dass das Streckverhältnis in Querrichtung auf 7 - 0,7 = 6,3 sinkt.

Die Temperatur bei der Wärmebehandlung (Annealing) nach den Strecken in Querrichtung liegt bevorzugt im Bereich von 110 bis 160 °C und besonders bevorzugt im Bereich von 125 bis 145 °C und das Relaxierungsverhältnis liegt bevorzugt im Bereich von 5 bis 10%. Während des Streckens und der Wärmebehandlung gehen die verbleibenden Fluide in die Gasphase über und hinterlassen so eine im Wesentlichen trockene Folie.

Besonders bevorzugt ist ein erfindungsgemäßes Verfahren, das dadurch gekennzeichnet ist, dass das Reckverhältnis bei der Verstreckung in Längsrichtung im Bereich von 5 bis 9 liegt und dass das Reckverhältnis bei der Verstreckung in Querrichtung im Bereich von 5 bis 9 liegt und dadurch gekennzeichnet, dass bei der Wärmebehandlung nach dem Verstrecken in Querrichtung (TD) eine Relaxierung der Folie in Querrichtung von 5 bis 10 % des Reckverhältnisses in Querrichtung durchgeführt wird.

Danach können die Ränder der Folie in bekannter Weise entfernt werden und die Folie kann mit geringem Wickelzug aufgewickelt werden.

Ganz besonders bevorzugt ist ein erfindungsgemäßes Verfahren zur Herstellung einer erfindungsgemäßen Folie, umfassend die Schritte:

-   Bereitstellen eines ersten Polyethylens (PE-1), welches ein gewichtsmittleres Molekulargewicht (Mw) im Bereich von 200.000 bis 600.000 g/mol und eine Kristallinität von mindestens 30 % aufweist,

-   Bereitstellen eines zweiten Polyethylens (PE-2), welches ein gewichtsmittleres Molekulargewicht (Mw) von 400.000 bis 1.500.000 g/mol und eine Kristallinität von mindestens 30 % aufweist, wobei das gewichtsmittlere Molekulargewicht des zweiten Polyethylens (PE-2) höher ist als das des ersten Polyethylens (PE-1),

-   Bereitstellen eines ersten Fluids (Fluid 1) mit einem Siedepunkt von 135 bis 300 °C,

-   Bereitstellen eines zweiten Fluids (Fluid 2) mit einem Siedepunkt von 135 bis 300 °C,

-   Schmelzen des ersten Polyethylens (PE-1) und mischen des ersten Fluids (Fluid 1) mit dem geschmolzenen ersten Polyethylen (PE-1), um eine erste Mischung zu erhalten, die 30 bis 70 Gewichtsprozent des ersten Fluids (Fluid 1) umfasst, bezogen auf die gesamte Masse der ersten Mischung,

-   Schmelzen des zweiten Polyethylens (PE-2) und mischen des zweiten Fluids (Fluid 2) mit dem geschmolzenen zweiten Polyethylen (PE-2), um eine zweite Mischung zu erhalten, die 30 bis 70 Gewichtsprozent des zweiten Fluids (Fluid 2) umfasst, bezogen auf die gesamte Masse der zweiten Mischung,

-   Co-Extrudieren der Mischungen mittels einer Mehrfach-Breitschlitz-Düse unter Herstellung einer mehrschichtigen Schmelze, wobei die erste Mischung wenigstens eine Schicht (A) und die zweite Mischung wenigstens eine Schicht (B) ausbildet,

-   Kühlen der so entstandenen mehrschichtigen Schmelze zu einem Film (Castfilm) mit einer Dicke von 400-800 $\mu$m,

-   Verstrecken des so entstandenen Films in Längsrichtung (MD) bei einer Temperatur von 95 bis 110 °C, wobei das Reckverhältnis in Längsrichtung im Bereich von 5 bis 9 liegt und die Folie nach dem Verstrecken in Längsrichtung noch mehr als 50 Gewichtsprozent der ursprünglich eingesetzten Gesamtmasse des ersten und zweiten Fluids enthält und die Folie nach dem Verstrecken in Längsrichtung eine Dicke von 50 bis 150 $\mu$m aufweist,

-   Durchführen einer Wärmebehandlung (Annealing) bei einer Temperatur im Bereich von 100 und 110 °C wobei die Folie nach dem Verstrecken in Längsrichtung noch mehr als 50 Gewichtsprozent der ursprünglich eingesetzten Gesamtmasse des ersten und zweiten Fluids enthält,

-   Verstrecken der so erhaltenen Folie in Querrichtung (TD) im Reckofen bei einer Temperatur von 50 bis 90 °C, wobei das Reckverhältnis in Querrichtung im Bereich von 5 bis 9 liegt,

- Durchführen einer Wärmebehandlung bei Temperaturen im Bereich von 125 bis 145 °C wobei eine Relaxierung der Folie in Querrichtung von 5 bis 10 % des Reckverhältnisses in Querrichtung durchgeführt wird und wobei die in der Folie noch enthaltenen Fluide in die Gasphase übergehen und so eine Folie mit einer Schichtdicke von 5 bis 16 $\mu$m erhalten wird.

**Beispiele:**

Messmethoden:

<div align="center">Dicke (Mittelwert):     DIN 53370</div>

Luftdurchlässigkeit und Änderung der

<div align="center">Luftdurchlässigkeit:     ISO 5636-5</div>

Porosität:(Wägemethode)

Die Porosität ergibt sich aus dem Verhältnis der Dichte der Folie zur Dichte des eingesetzten Materials gemäß den Formeln:

$$Dichte\ der\ Folie = \frac{Gewicht}{Fläche \cdot Dicke}$$

$$Porosit\ddot{a}t\ in\ \% = \left[1 - \left(\frac{Dichte\ der\ Folie}{Dichte\ des\ Materials}\right)\right] \cdot 100$$

Dazu wird die Dicke und das Gewicht eines Musters der Größe 100x100 mm gemessen und daraus die Musterdichte bestimmt. Die Materialdichte wird dem Datenblatt des verwendeten Basisrohstoffs entnommen und aus diesen beiden Werten die Porosität berechnet. Die Porosität einzelner Schichten kann durch Trennen der Schichten und messen der Porosität nur einer Schicht ermittelt werden.

<div align="center">

Zerreißfestigkeit:     ASTM D 882
Punktionsfestigkeit:     DIN EN 14477

</div>

Thermische Schrumpfung: (freier Schrumpf im Ofen)

Der thermische Schrumpf wird im Ofen bei 105 °C für 60 min gemessen und ergibt sich aus dem Verhältnis der Ausgangslänge $L_a$ zur Länge nach thermischer Schrumpfung $L_t$. Der thermische Schrumpf ergibt sich nach der Formel:

<div align="center">

`Schrumpf (105°C/60min) = (L`$_a$` - L`$_t$`) / L`$_a$` x 100%`

</div>

Dazu wird ein Muster der Größe 100x100 mm im Ofen bei 105 °C für 60 min zwischen zwei Blättern Papier gelegt. Nach Ablauf der 60 min wird das Muster aus dem Ofen entfernt und die Musterlänge $L_t$ in beiden Hauptrichtungen (Maschinenrichtung und Querrichtung) mit einer Genauigkeit von 0,5 mm gemessen.
Die Messung von Teilchengrößen erfolgt durch Laserbeugungs-Partikelgrößenanalyse.

Materialien:

Als erstes Polyethylen wurde in allen Versuchen von Beispiel 1 Hostalen ACP 9255+ der Firma LyondellBasell, Frankfurt am Main, Germany eingesetzt. Dieses Polyethylen ist ein High-Density Polyethylen (HDPE), welches ein gewichtsmittleres Molekulargewicht von 350.000 g/mol aufweist und einen Erweichungspunkt nach Vicat von 76 °C und seinen höchsten Schmelzpunkt bei 133 °C aufweist. Als zweites Polyethylen wurde in allen Beispielen Yuhwa Hiden VH035 der Firma Korea Petrochemical Ind. Co, Ltd., Ulsan, Korea eingesetzt. Dieses Polyethylen ist ein High-Density Polyethylen (HDPE), welches ein gewichtsmittleres Molekulargewicht von 600.000 g/mol aufweist und seinen höchsten Schmelzpunkt bei 136 °C aufweist. Als drittes Polyethylen wurde in Versuchen 6 und 7 von Beispiel 1 Yuhwa Hiden VH150 der Firma Korea Petrochemical Ind. Co, Ltd., Ulsan, Korea eingesetzt. Dieses Polyethylen weist ein gewichtsmittleres Molekulargewicht von 1.500.000g/mol auf. Ferner wurde als drittes Polyethylen in Versuchen 8 bis 11 von Beispiel 1 GUR®2024 der Celanese Corporation eingesetzt. Dieses Polyethylen weist ein gewichtsmittleres Molekulargewicht von 5.400.000g/mol auf. Als Fluid 1 und als Fluid 2 wird in allen Versuchen Spirdane D60 der Firma Total Chemicals eingesetzt. In Versuch 5 wird Actilox 200 AS1 der Firma Nabaltec AG, Schwandorf, Deutschland als Additiv eingesetzt. Dabei handelt es sich um einen Füllstoff, der zu mehr als 99 Gewichtsprozent aus Partikeln von AlOOH besteht und eine Teilchengröße von D10 von 0,2 pm, D50 von 0,32 $\mu$m und D90 von 0,6 $\mu$m und eine BET Oberfläche von 17 m²/g aufweist.

Der Masseanteil der Schicht (A) an der Gesamtmasse der eingesetzten Ausgangsstoffe ohne die Fluide beträgt 27 Gewichtsprozent in Versuch 1 von Beispiel 1 und 20 Gewichtsprozent in allen anderen Versuchen von Beispiel 1. Entsprechend beträgt der Masseanteil der Schicht (B) an der Gesamtmasse der eingesetzten Ausgangsstoffe ohne die Fluide 73 Gewichtsprozent in Versuch 1 von Beispiel 1 und 80 Gewichtsprozent in allen anderen Versuchen von Beispiel 1.

Als Beschichtungslösung für die Herstellung der keramischen Beschichtung wird eine kommerziell erhältliche wässrige Suspension von $Al_2O_3$, die ein polymeres Bindemittel auf Acrylbasis enthält, verwendet. Die Teilchengröße d90 ist kleiner 2pm. Der Feststoffgehalt beträgt etwa 40 Gewichtsprozent bezogen auf die Gesamtmasse der Beschichtungslösung.

Beispiel 1: Herstellung der Folien

*Gemeinsame Versuchsbeschreibung für alle Versuche von Beispiel 1:*

### i) Explosionsschutz

Der erfindungsgemäße Prozess erfordert wie jeder EVAPORE Prozess besondere Vorsichtsmaßnahmen aufgrund des Flammpunkts (50-70°C) und der Selbstentzündungstemperatur (200-250 °C) der verwendeten Fluide. Es kommt sowohl Explosionsschutz durch sicheres elektrische Equipment als auch eine Kapselung der betreffenden Anlagenkomponenten zum Einsatz. Eine extensive, redundante Absaugung sorgt für ausreichenden Luftaustausch und hält die Konzentration des Lösemittels in der Umgebungsluft unterhalb der unteren Explosionsgrenze (UEG) und unterhalb der Arbeitsplatzgrenzwerte. Somit wird die Gefahr eines Brandes minimiert. Zusätzliche Maßnahmen sorgen für weiteren Schutz von Menschen und des Equipments im Ernstfall.

### ii) Extrudieren

Es wurden zwei voneinander unabhängige Doppelschneckenextruder zum Aufschmelzen und zum Homogenisieren von zwei verschiedenen Rezepturen verwendet. Extruder A wird für die Herstellung der homogenen Mischung für Schicht (A) basierend auf PE-1 verwendet. Extruder B wird für die Herstellung der homogenen Mischung für Schicht (B) basierend auf PE-2 verwendet.

Extruder A wird mit granularem oder pulverförmigen PE-1 und Fluid 1 und gegebenenfalls mit Additiven beaufschlagt. Die Dosierung der Feststoffe und insbesondere des Polymers erfolgt über eine oder mehrere Dosierwaagen. Die Dosierung des Fluids erfolgt über Einspritzventile direkt in den Extruder an einer Position an der das Polymer bereits aufgeschmolzen ist. Fluid und Polymer werden in der weiteren Extruderstrecke zu einer einphasigen Schmelze vermischt.

Extruder B wird mit pulverförmigen PE-2, Fluid 2 und gegebenenfalls mit Additiven beaufschlagt. Die Dosierung der Feststoffe und insbesondere der Polymere erfolgt über eine oder mehrere Dosierwaagen. Die Dosierung des Fluids 2 erfolgt über Einspritzventile direkt in den Extruder kurz nach der Dosierung des Polymers. Fluid 2 und Polymer werden in der weiteren Extruderstrecke zu einer einphasigen Schmelze vermischt.

Beide Schmelzen aus Extruder A und Extruder B werden in einer 3-Lagen Düse zu einem A-B-A-Schichtaufbau zusammengeführt. Die Temperatur der Schmelze liegt beim Austritt aus der Düse zwischen 150-185°C, wobei die Temperatur der Schicht (A) 150-160°C beträgt und die Temperatur der Schicht B 175-185°C beträgt.

Die Nanopartikel und das hochmolekulare Polyethylen vom Typ PE-3 werden über Dosierwaagen direkt in die Extruder gegeben. Das hochmolekulare Polyethylen wird nach dem zweiten Polyethylen (PE-1) hinzugegeben, jedoch vor der Zugabe des Fluids.

*iii) Filmgießen und Folienabziehen*

Die aus der Flachdüse austretende Schmelze wird gekühlt und verfestigt, hierdurch entsteht der sogenannte Castfilm. Die Abkühlung erfolgt mit Hilfe von zwei Kühlwalzen und einem Wasserbad. Die Abzugsgeschwindigkeit liegt zwischen 1 bis 4 m/min.

*iv) Strecken in Längsrichtung (Maschinenrichtung)*

Die Folie wird monoaxial in Längsrichtung gereckt. Anschließend wird bei 100 bis 110°C eine Wärmebehandlung durchgeführt. Nach der Wärmebehandlung liegen wenigstens 50 Gewichtsprozent der ursprünglich eingesetzten Menge des Fluids weiterhin in der Folie vor.

*v) Strecken in Querrichtung, Relaxierung und Annealing*

Nach dem Strecken in Längsrichtung wird die Folie in Querrichtung gestreckt. Nach dem Strecken wird die Folie relaxiert und wärmebehandelt (Annealing). Während des Streckens und der Wärmebehandlung geht das verbleibende Fluid quantitativ in die Gasphase über und hinterlässt eine trockene Folie.

Daten der einzelnen Versuche

Es wurden insgesamt 11 Versuche durchgeführt, deren Daten in den folgenden Tabellen wiedergegeben werden. Die folgende Tabelle 1 gibt die Arten und Mengen der eingesetzten Reagenzien wieder, soweit sie nicht vorstehend bereits genannt wurden.

Tabelle 1:

| Versuch | Schicht | Anteil Fluid | Additive |
|---------|---------|--------------|----------|
| 1 | A | 53 | |
| | B | 66 | |
| 2 | A | 51-71 | |
| | B | 64-66 | |
| 3 | A | 50-53 | |
| | B | 60 | |
| 4 | A | 57 | |
| | B | 57 | |
| 5 | A | 57 | 50 % Actilox 200 AS1 |
| | B | 55-57 | |
| 6 | A | 57 | |
| | B | 63-66 | 20 % Yuhwa Hiden VH150 |
| 7 | A | 54 | |
| | B | 63 | 30 % Yuhwa Hiden VH150 |
| 8 | A | 54 | |
| | B | 64 | 10 % GUR®2024 |
| 9 | A | 54 | |
| | B | 64 | 15 % GUR®2024 |
| 10 | A | 54 | |
| | B | 64 | 20 % GUR®2024 |
| 11 | A | 54 | |

(fortgesetzt)

| Versuch | Schicht | Anteil Fluid | Additive |
|---|---|---|---|
| | B | 64 | 25 % GUR®2024 |
| 12 | A | 63 | |
| | B | 54 | |
| 13 | A | 63 | |
| | B | 54 | |

Erläuterungen zur Tabelle 1: Die Angaben in der Spalte Additive geben den Gewichtsanteil der angegebenen Additive an der jeweiligen Schicht ohne Berücksichtigung des Fluids an. So enthält zum Beispiel Schicht (A) von Versuch 5 50 Gewichtsprozent des Füllstoffs Actilox 200 AS1 und 50 Gewichtsprozent des ersten Polyethylens (PE-1) Hostalen ACP 9255+, jeweils bezogen auf die Summe der Masse dieser beiden Feststoffe. Das frisch extrudierte Material von Versuch 5 besteht zu 57 Gewichtsprozent aus dem Fluid Spirdane D60 und 43 Gewichtsprozent der Gesamtmasse der Feststoffe Hostalen ACP 9255+ und Actilox 200 AS1. Entsprechend enthält Schicht (B) von Versuch 6 20 Gewichtsprozent Yuhwa Hiden VH150 und 80 Gewichtsprozent Yuhwa Hiden VH035, jeweils bezogen auf die Summe dieser beiden Feststoffe und damit 100 Gewichtsprozent des wenigstens einen hochmolekularen Polyethylens (PE-H). Das entsprechende gilt für Versuch 7.

Tabellen 2 bis 5 in der Anlage zeigen die physikalischen Daten der erhaltenen Produkte und die Parameter der Herstellungsverfahren.

Tabelle 2 gibt die Verfahrensparameter für die Herstellung des Castfilms aus der Schmelze wieder.

Tabelle 3 gibt die Verfahrensparameter für das Strecken in Längsrichtung wieder und die anschließende Wärmebehandlung (Annealing) wieder.

Tabelle 4 gibt die Verfahrensparameter für das Strecken in Querrichtung und die anschließende Wärmebehandlung (Annealing) wieder.

Beispiel 2: Beschichtung der Folien

Die Folien wurden auf die Größe von etwa A4 zugeschnitten. Die Gurleyzahl wurde an zwei Stellen der Folie gemessen. Der Mittelwert dieser beiden Messungen ist der Wert der Luftdurchlässigkeit der nicht beschichteten Folie. Das Stück zugeschnittene Folie wird auf einem Beschichtungstisch mit Vakuumplatte fixiert. Dann werden mit einem Rakel 2 ml Beschichtungsflüssigkeit mit einer Geschwindigkeit von 40 mm/s über eine Breite von 80 mm aufgebracht. Die Folie wird anschließend in einem Trockenschrank bei 40 bis 45 °C für 2 Minuten getrocknet. Nach dem Trocken wird die Gurleyzahl erneut an zwei Stellen gemessen. Der daraus ermittelte Mittelwert ist der Wert der Luftdurchlässigkeit der beschichteten Folie.

Ergebnisse der Beispiele:

Tabelle 5 gibt die physikalischen Daten der erhaltenen Folien wieder. Wie man sieht sind die Daten für die Zerreißfestigkeit in Längsrichtung (MD) merklich höher als die Werte aus dem Stand der Technik (siehe Tabelle 1 der WO 2012/138398 A1, Versuche #2 und #3). Die Werte für die Zerreißfestigkeit in Querrichtung (TD) sind jedoch deutlich höher als im Stand der Technik, etwa viermal so hoch und in derselben Größenordnung wie die Werte in Längsrichtung. Damit weisen die vorliegenden Folien deutlich vorteilhaftere mechanische Eigenschaften auf als die Folien nach dem Stand der Technik. Ferner kann man erkennen, dass die Änderung der Luftdurchlässigkeit für die meisten Folien unter 15 s/100ml liegt und damit deutlich unterhalb dem Grenzwert von 25 s/100ml liegt. Die vorliegenden Folien sind daher deutlich besser geeignet für die Weiterverarbeitung zu Akkumulator- oder Batterie-Separatoren als die Folien nach dem Stand der Technik. Porosität, Punktionsfestigkeit und thermische Schrumpfung sind ebenfalls innerhalb der gewünschten Parameter.

Tabelle 2:

| Versuch | Kühlwalze | | | Wasserbad | Castfilm | |
|---|---|---|---|---|---|---|
| | Geschwindigkeit [m/min] | Nr. 1 Temperatur [°C] | Nr. 2 Temperatur [°C] | Temperatur [°C] | Dicke [mm] | Breite [mm] |
| 1 | 2,1 | 60,0 | 45,0 | 29,8 | 500 | 390 |

(fortgesetzt)

| Versuch | Kühlwalze | | | Wasserbad | Castfilm | |
|---|---|---|---|---|---|---|
| | Geschwindigkeit [m/min] | Nr. 1 Temperatur [°C] | Nr. 2 Temperatur [°C] | Temperatur [°C] | Dicke [mm] | Breite [mm] |
| 2.1 | 2,9 | 60,0 | 54,9 | 29,8 | 500 | 390 |
| 2.2 | 2,7 | 60,0 | 55,2 | 30,3 | 500 | 390 |
| 2.3 | 2,2 | 60,0 | 55,2 | 29,6 | 500 | 390 |
| 2.4 | 2,0 | 60,0 | 45,0 | 30,1 | 500 | 390 |
| 3.1 | 2,0 | 60,0 | 54,9 | 29,6 | 500 | 390 |
| 3.2 | 2,0 | 60,0 | 54,9 | 29,8 | 500 | 390 |
| 4.1 | 2,4 | 60,0 | 54,9 | 30,1 | 500 | 390 |
| 4.2 | 2,4 | 60,0 | 55,2 | 29,6 | 500 | 390 |
| 5.1 | 2,4 | 60,0 | 55,2 | 30,1 | 500 | 390 |
| 5.2 | 2,4 | 60,0 | 55,2 | 29,6 | 500 | 390 |
| 6 | 2,4 | 60,0 | 54,9 | 29,6 | 500 | 390 |
| 7.1 | 2,4 | 60,0 | 54,9 | 29,6 | 500 | 390 |
| 7.2 | 2,3 | 60,0 | 54,9 | 30,3 | 500 | 390 |
| 7.3 | | 60,0 | | | 500 | 390 |
| 8 | 2,2 | 60,0 | 54,9 | 30,3 | 500 | 390 |
| 9 | 2,2 | 60,0 | 54,9 | 30,3 | 500 | 390 |
| 10 | 2,2 | 60,0 | 54,9 | 30,3 | 500 | 390 |
| 11 | 2,2 | 60,0 | 54,9 | 29,6 | 500 | 390 |
| 12 | 2,0 | 60,0 | 54,9 | 31,3 | 500 | 390 |
| 13 | 2,2 | 60,0 | 44 | 31,3 | 500 | 390 |

Tabelle 3:

| Versuch | Vorheizen | Strecken | Wärmebehandlung (Annealing) | | Reckverhältnis | Geschwindigkeit | Filmbreite | Filmdicke |
|---|---|---|---|---|---|---|---|---|
| | Zone 1 | Zonen 2-4 | Zone 5 | Zone 6 | | | | |
| | [°C] | [°C] | [°C] | [°C] | | [m/min] | [mm] | [µm] |
| 1 | 63-92 | 95-104 | 90 | 62 | 6 | 12,1 | 286,0 | 80,0 |
| 2.1 | 63-92 | 95-104 | 94 | 64 | 5,1 | 14,2 | 260,0 | 80,0 |
| 2.2 | 63-92 | 95-104 | 94 | 64 | 5,61 | 14,5 | 260,0 | 80,0 |
| 2.3 | 63-92 | 95-104 | 94 | 64 | 7,07 | 14, 9 | 262,0 | 80,0 |
| 2.4 | 63-92 | 95-104 | 88 | 60 | 6,0 | 11,6 | 280,0 | 80,0 |
| 3.1 | 63-92 | 95-104 | 88 | 60 | 6,0 | 11,5 | 274,0 | 80,0 |
| 3.2 | 63-92 | 95-104 | 88 | 60 | 6,0 | 11,5 | 274,0 | 80,0 |
| 4.1 | 63-92 | 95-104 | 90 | 62 | 6,0 | 13,9 | 274,0 | 80,0 |
| 4.2 | 63-92 | 95-104 | 90 | 62 | 6,0 | 13,9 | 274,0 | 80,0 |
| 5.1 | 63-92 | 95-104 | 90 | 62 | 6,0 | 13,9 | 274,0 | 80,0 |
| 5.2 | 63-92 | 95-104 | 90 | 62 | 6,0 | 13,9 | 274,0 | 80,0 |
| 6 | 63-92 | 95-104 | 98 | 68 | 6,06 | 13,9 | 274,0 | 80,0 |
| 7.1 | 63-92 | 95-104 | 98 | 68 | 6,06 | 13,9 | 274,0 | 80,0 |
| 7.2 | 63-92 | 95-104 | 98 | 68 | 7,07 | 15,6 | 260,0 | 80,0 |
| 7.3 | | | | | | | | 80,0 |
| 8 | 63-92 | 95-104 | 94 | 64 | 7,07 | 14,9 | 260,0 | 80,0 |
| 9 | 63-92 | 95-104 | 94 | 64 | 7,07 | 14,9 | 260,0 | 80,0 |
| 10 | 63-92 | 95-104 | 94 | 64 | 7,07 | 14,9 | 260,0 | 80,0 |
| 11 | 63-92 | 95-104 | 94 | 64 | 7,07 | 14,9 | 260,0 | 80,0 |
| 12 | 63-92 | 95-104 | 94 | 64 | 7,07 | 15,2 | 260,0 | 80,0 |
| 13 | 63-92 | 95-104 | 94 | 64 | 7,07 | 14,9 | 260,0 | 80,0 |

Tabelle 4:

| Versuch | Vorheizen | | | Strecken | Wärmebehandlung (Annealing) | | | Kühlen | Reckverhältnis |
|---|---|---|---|---|---|---|---|---|---|
| | Zone 1 | Zone 2 | Zone 3 | Zone 4-5 | Zone 6-7 | | Zone 8 | Zone 9 | |
| | [°C] | [°C] | [°C] | [°C] | [°C] | | [°C] | [°C] | |
| 1 | 58 | 58 | 58 | 73-112 | 128-132 | | 56 | 50 | 6,6 |
| 2.1 | 58 | 58 | 58 | 72-112 | 128-132 | | 56 | 50 | 8 |
| 2.2 | 62 | 62 | 62 | 77-112 | 128-132 | | 56 | 50 | 8 |
| 2.3 | 62 | 62 | 62 | 76-112 | 128-132 | | 58 | 56 | 7 |
| 2.4 | 54 | 54 | 56 | 70-112 | 128-132 | | 56 | 50 | 6,8 |
| 3.1 | 54 | 54 | 56 | 70-112 | 128-132 | | 56 | 50 | 7,0 |
| 3.2 | 54 | 54 | 56 | 70-113 | 128-132 | | 56 | 50 | 7,0 |
| 4.1 | 56 | 56 | 58 | 72-112 | 128-132 | | 56 | 50 | 7,0 |
| 4.2 | 58 | 58 | 60 | 74-112 | 128-132 | | 56 | 50 | 7,0 |
| 5.1 | 60 | 60 | 62 | 76-112 | 128-132 | | 57 | 50 | 7,0 |
| 5.2 | 62 | 62 | 64 | 78-112 | 128-132 | | 56 | 50 | 7,0 |
| 6 | 58 | 58 | 60 | 74-112 | 128-132 | | 57 | 50 | 7 |
| 7.1 | 58 | 58 | 60 | 74-112 | 128-132 | | 56 | 50 | 7 |
| 7.2 | 62 | 62 | 64 | 79-112 | 128-132 | | 56 | 50 | 8 |
| 7.3 | | | | | | | | | |
| 8 | 58 | 58 | 58 | 72-112 | 128-132 | | 56 | 50 | 8 |
| 9 | 60 | 60 | 60 | 75-112 | 128-132 | | 56 | 50 | 8 |
| 10 | 60 | 60 | 60 | 74-112 | 128-132 | | 56 | 50 | 8 |
| 11 | 71 | 70 | 70 | 84-112 | 128-132 | | 56 | 50 | 8 |
| 12 | 60 | 60 | 60 | 65-110 | 124-132 | | 56 | 50 | 8 |
| 13 | 68 | 67 | 67 | 85-112 | 124-132 | | 55 | 50 | 8 |

Tabelle 5:

| Versuch | Dicke (Mittelwert) | Luftdurchlässigkeit | Änderung der Luftdurchlässigkeit | Porosität | Zerreißfestigkeit | | Punktionsfestigkeit | Thermische Schrumpfung | |
|---|---|---|---|---|---|---|---|---|---|
| | | | | | MD | TD | | MD | TD |
| | Dicke [μm] | s/100ml | s/100ml | [%] | [N/mm$^2$] | | [g/12μm] | [%] | |
| 1 | 11,9 | 164 | 4 | 50 | 135 | 110 | 372 | | |
| 2.1 | 10,5 | 199 | | 40 | 158 | 149 | 369 | 5,3 | 1,8 |
| 2.2 | 11,4 | 201 | | 43 | 145 | 147 | 385 | 6,2 | 3,0 |
| 2.3 | 9,3 | 205 | | 45 | 188 | 165 | 375 | 6,8 | 7,3 |
| 2.4 | 13,2 | 123 | 2 | 54 | 124 | 110 | 354 | | |
| 3.1 | 13,0 | 188 | 9 | 48 | 147 | 143 | 414 | 5,8 | 6,5 |
| 3.2 | 13,8 | 218 | | 49 | 151 | 121 | 450 | 5,2 | 5,5 |
| 4.1 | 13,8 | 229 | | 47 | 164 | 139 | 454 | 6,5 | 6,3 |
| 4.2 | 14,5 | 186 | | 50 | 158 | 138 | 485 | 5,8 | 7,8 |
| 5.1 | 13,4 | 198 | 13 | 52 | 155 | 120 | 527 | 6,7 | 6,8 |
| 5.2 | 14,0 | 214 | 7 | 50 | 156 | 141 | 491 | 5,7 | 4,5 |
| 6 | 13,7 | 190 | | 49 | 155 | 115 | 466 | 5,8 | 6,5 |
| 7.1 | 13,1 | 201 | 14 | 49 | 173 | 132 | 492 | 6,8 | 9,2 |
| 7.2 | 11,1 | 216 | 10 | 50 | 186 | 123 | 453 | 7,7 | 12,0 |
| 7.3 | 12,0 | 187 | 25 | 53 | 192 | 108 | 442 | 6,3 | 15,8 |
| 8 | 9, 3 | 585 | | 42 | | | | 7,4 | 9,1 |
| 9 | 10,8 | 466 | | 44 | | | | 8,2 | 10,8 |
| 10 | 9, 7 | 868 | | 40 | | | | 8,6 | 8,5 |
| 11 | 13,6 | 261 | | 55 | 179 | 90 | 424 | 12,0 | 16,8 |
| 12 | 5,3 | 153 | | 37 | 306 | 246 | 285 | 5,5 | 6,8 |
| 13 | 7,9 | 49 | | 60 | 189 | 123 | 231 | 14,4 | 22,7 |

**Patentansprüche**

1. Biaxial orientierte Folie umfassend wenigstens eine Schicht (A) und wenigstens eine Schicht (B), wobei

   Schicht (A) wenigstens ein erstes Polyethylen (PE-1) enthält und Schicht (B) wenigstens ein hochmolekulares Polyethylen (PE-H) enthält, welches wenigstens ein zweites Polyethylen (PE-2) umfasst und wobei
   Schicht (A) wenigstens 50 Gewichtsprozent des wenigstens einen ersten Polyethylens (PE-1) bezogen auf das Gesamtgewicht der Schicht (A) enthält, Schicht (B) wenigstens 50 Gewichtsprozent des wenigstens einen hochmolekularen Polyethylens (PE-H) bezogen auf das Gesamtgewicht der Schicht (B) enthält und das wenigstens eine hochmolekulare Polyethylen (PE-H) wenigstens 50 Gewichtsprozent des wenigstens einen zweiten Polyethylens (PE-2) bezogen auf das Gesamtgewicht des wenigstens einen hochmolekularen Polyethylens (PE-H) enthält und
   wobei das wenigstens eine erste Polyethylen (PE-1) ein gewichtsmittleres Molekulargewicht (Mw) im Bereich von 200.000 g/mol bis 600.000 g/mol aufweist, das wenigstens eine zweite Polyethylen (PE-2) ein gewichtsmittleres Molekulargewicht (Mw) im Bereich von 400.000 g/mol bis 1.500.000 g/mol aufweist und das wenigstens eine hochmolekulare Polyethylen (PE-H) und das wenigstens eine zweite Polyethylen (PE-2) jeweils ein gewichtsmittleres Molekulargewicht aufweisen, welches höher ist als das gewichtsmittlere Molekulargewicht des wenigstens einen ersten Polyethylens (PE-1) und
   wobei die Folie eine Porosität im Bereich von 30 % bis 70 % aufweist, bestimmt wie in der Beschreibung angegeben und unter den Begriff Polyethylen auch Copolymere fallen, die neben Ethylen bis zu 10 Gewichtsprozente alpha-Olefine enthalten.

2. Folie nach Anspruch 1, **dadurch gekennzeichnet, dass** sie wenigstens zwei Schichten (A) und eine Schicht (B) umfasst, die in der Reihenfolge von A-B-A angeordnet sind.

3. Folie nach einem der vorangehenden Ansprüche, **dadurch gekennzeichnet, dass** wenigstens eine Schicht (A) eine Außenschicht der Folie bildet.

4. Folie nach einem der vorangehenden Ansprüche, **dadurch gekennzeichnet, dass** beide Außenschichten der erfindungsgemäßen Folie aus Schichten (A) gebildet sind.

5. Folie nach einem der vorangehenden Ansprüche, **dadurch gekennzeichnet, dass** die Porosität der Schicht (A) der erfindungsgemäßen Folie in einem Bereich von 35 bis 70 % liegt und die Porosität der Schicht (B) der erfindungsgemäßen Folie in einem Bereich von 30 bis 65 % liegt.

6. Folie nach einem der vorangehenden Ansprüche, **dadurch gekennzeichnet, dass** der Anteil der Dicke aller Schichten (A) der erfindungsgemäßen Folie im Bereich von 5 bis 50 % und der Anteil aller Schichten (B) im Bereich von 50 bis 95 % jeweils bezogen auf die Gesamtdicke der Schichten (A) und (B) der Folie.

7. Folie nach einem der vorangehenden Ansprüche, **dadurch gekennzeichnet, dass** Schicht (A) wenigstens 80 Gewichtsprozent bevorzugt wenigstens 95 Gewichtsprozent und am meisten bevorzugt 100 Gewichtsprozent des wenigstens einen ersten Polyethylens (PE-1) bezogen auf das Gesamtgewicht der Schicht (A) enthält.

8. Folie nach einem der vorangehenden Ansprüche, **dadurch gekennzeichnet, dass** Schicht (A) kein Polyethylen enthält das ein Molekulargewicht aufweist, das größer ist als das Molekulargewicht des ersten Polyethylens (PE-1).

9. Folie nach einem der vorangehenden Ansprüche, **dadurch gekennzeichnet, dass** Schicht (A) kein Polypropylen enthält.

10. Folie nach einem der vorangehenden Ansprüche, **dadurch gekennzeichnet, dass** das erste Polyethylen (PE-1) ein gewichtsmittleres Molekulargewicht (Mw) im Bereich von 200.000 g/mol bis 450.000 g/mol aufweist und das zweite Polyethylen (PE-2) ein gewichtsmittleres Molekulargewicht (Mw) im Bereich von 500.000 g/mol bis 1.500.000 g/mol aufweist.

11. Folie nach einem der vorangehenden Ansprüche, **dadurch gekennzeichnet, dass** das wenigstens eine hochmolekulare Polyethylen (PE-H) zusätzlich wenigstens ein drittes Polyethylen (PE-3) enthält, das ein höheres mittleres Molekulargewicht aufweist als das zweite Polyethylen (PE-2).

12. Folie nach einem der vorangehenden Ansprüche, **dadurch gekennzeichnet, dass** das erste Polyethylen (PE-1) ein gewichtsmittleres Molekulargewicht (Mw) im Bereich von 200.000 g/mol bis 450.000 g/mol aufweist und das zweite Polyethylen (PE-2) ein gewichtsmittleres Molekulargewicht (Mw) im Bereich von 500.000 g/mol bis 900.000 g/mol aufweist.

13. Folie nach einem der vorangehenden Ansprüche, insbesondere nach Anspruch 7, **dadurch gekennzeichnet, dass** wenigstens eine Schicht (A) eine Außenschicht der Folie bildet, die Schicht (B) wenigstens 80 Gewichtsprozent des wenigstens einen hochmolekularen Polyethylens (PE-H) bezogen auf das Gesamtgewicht der Schicht (B) enthält, die Gesamtmasse aller Schichten (A) 10 bis 35 Gewichtsprozent beträgt und die Gesamtmasse aller Schichten (B) 65 bis 90 Gewichtsprozent jeweils bezogen auf die gesamte Folie beträgt und die Dicke der Folie in einem Bereich von 3 µm bis 50 µm liegt.

14. Folie nach einem der vorangehenden Ansprüche, **dadurch gekennzeichnet, dass** sie Additive enthält, wobei es sich bevorzugt um Füllstoffe handelt.

15. Folie nach einem der vorangehenden Ansprüche, **dadurch gekennzeichnet, dass** sie wenigstens eine keramische Beschichtung mit keramischen Partikeln aufweist, die direkt mit der Oberfläche wenigstens einer Schicht (A) verbunden ist.

16. Batterie Separator Folie (BSF) umfassend eine Folie nach einem der vorangehenden Ansprüche.

17. Lithiumionenbatterie umfassend eine Folie nach einem der vorangehenden Ansprüche.

18. Verfahren zur Herstellung einer Folie gemäß einem der Ansprüche 1 bis 16, umfassend die Schritte:

   - Bereitstellen eines ersten Polyethylens (PE-1), welches ein gewichtsmittleres Molekulargewicht (Mw) im Bereich von 200.000 g/mol bis 600.000 g/mol aufweist,
   - Bereitstellen eines zweiten Polyethylens (PE-2), welches ein gewichtsmittleres Molekulargewicht (Mw) von 400.000 bis 1.500.000 g/mol, wobei das gewichtsmittlere Molekulargewicht des zweiten Polyethylens (PE-2) höher ist als das des ersten Polyethylens (PE-1),
   - Bereitstellen eines ersten Fluids (Fluid 1) mit einem Siedepunkt von 135 bis 300 °C,
   - Bereitstellen eines zweiten Fluids (Fluid 2) mit einem Siedepunkt von 135 °C bis 300 °C,
   - Schmelzen des ersten Polyethylens (PE-1) und mischen des ersten Fluids (Fluid 1) mit dem geschmolzenen ersten Polyethylen (PE-1), um eine erste Mischung zu erhalten, die 30 bis 70 Gewichtsprozent des ersten Fluids (Fluid 1) umfasst, bezogen auf die gesamte Masse der ersten Mischung,
   - Schmelzen des zweiten Polyethylens (PE-2) und mischen des zweiten Fluids (Fluid 2) mit dem geschmolzenen zweiten Polyethylen (PE-2), um eine zweite Mischung zu erhalten, die 30 bis 70 Gewichtsprozent des zweiten Fluids (Fluid 2) umfasst, bezogen auf die gesamte Masse der zweiten Mischung,
   - Co-Extrudieren der so erhaltenen Mischungen mittels einer Mehrfach-Breitschlitz-Düse unter Herstellung einer mehrschichtigen Schmelze, wobei die erste Mischung wenigstens eine Schicht (A) und die zweite Mischung wenigstens eine Schicht (B) ausbildet,
   - Kühlen der so entstandenen mehrschichtigen Schmelze zu einem Film (Castfilm),
   - Verstrecken des so entstandenen Films in Längsrichtung (MD),
   - Durchführen einer Wärmebehandlung (Annealing),
   - Verstrecken des so erhaltenen in Längsrichtung gestreckten Films in Querrichtung (TD),
   - Durchführen einer Wärmebehandlung, wobei die in der Folie noch enthaltenen Fluide in die Gasphase übergehen,
   - wobei es sich bei den Fluiden 1 und 2 um organische Flüssigkeiten handelt, nämlich

      a) um organische Flüssigkeiten, die keine Heteroatome oder außer Sauerstoff keine Heteroatome umfassen und keine aromatischen Gruppen enthalten, und/oder
      b) um Alkane oder Gemische davon.

19. Verfahren nach Anspruch 18, **dadurch gekennzeichnet, dass** das Reckverhältnis bei der Verstreckung in Längsrichtung im Bereich von 5 bis 9 liegt und dass das Reckverhältnis bei der Verstreckung in Querrichtung im Bereich von 5 bis 9 liegt und **dadurch gekennzeichnet, dass** bei der Wärmebehandlung nach dem Verstrecken in Querrichtung (TD) eine Relaxierung der Folie in Querrichtung von 5 % bis 10 % des Reckverhältnisses in Querrichtung durchgeführt wird.

**20.** Verfahren nach einem der Ansprüche 18 oder 19, **dadurch gekennzeichnet, dass** bei der Wärmebehandlung nach dem Verstrecken in Längsrichtung (MD) eine Relaxierung der Folie in Längsrichtung von bis zu 5 % des Reckverhältnisses in Längsrichtung durchgeführt wird.

**21.** Folie nach einem der Ansprüche 1 bis 16 oder Verfahren nach einem der Ansprüche 18 bis 20, **dadurch gekennzeichnet, dass** die Dicke der Folie in einem Bereich von 3 μm bis 50 pm, bevorzugt in einem Bereich von 5 μm bis 30 μm liegt.

**Claims**

**1.** Biaxially oriented film, comprising at least one layer (A) and at least one layer (B), wherein

layer (A) contains at least one first polyethylene (PE-1) and layer (B) contains at least one high molecular weight polyethylene (PE-H) which comprises at least one second polyethylene (PE-2), and wherein layer (A) contains at least 50 weight per cent of the at least one first polyethylene (PE-1) based on the total weight of the layer (A), layer (B) contains at least 50 weight per cent of the at least one high molecular weight polyethylene (PE-H) based on the total weight of the layer (B), and the at least one high molecular weight polyethylene (PE-H) contains at least 50 weight per cent of the at least one second polyethylene (PE-2) based on the total weight of the at least one high molecular weight polyethylene (PE-H), and wherein the at least one first polyethylene (PE-1) has a weight-average molecular weight (Mw) in the range from 200,000 g/mol to 600,000 g/mol, the at least one second polyethylene (PE-2) has a weight-average molecular weight (Mw) in the range from 400,000 g/mol to 1,500,000 g/mol and the at least one high molecular weight polyethylene (PE-H) and the at least one second polyethylene (PE-2) each have a weight-average molecular weight that is higher than the weight-average molecular weight of the at least one first polyethylene (PE-1), and wherein the film has a porosity in the range from 30% to 70%, determined as specified in the description, and term polyethylene also includes copolymers that contain up to 10 per cent by weight of alpha-olefins in addition to ethylene.

**2.** Film according to claim 1, **characterised in that** it comprises at least two layers (A) and a layer (B) which are arranged in the order A-B-A.

**3.** Film according to either of the preceding claims, **characterised in that** at least one layer (A) forms an outer layer of the film.

**4.** Film according to one of the preceding claims, **characterised in that** both outer layers of the film according to the invention are formed of layers (A).

**5.** Film according to one of the preceding claims, **characterised in that** the porosity of the layer (A) of the film according to the invention is in a range from 35 to 70% and the porosity of the layer (B) of the film according to the invention is in a range from 30 to 65%.

**6.** Film according to one of the preceding claims, **characterised in that** the proportion of the thickness of all layers (A) of the film according to the invention [is] in the range from 5 to 50% and the proportion of all layers (B) [is] in the range from 50 to 95%, based in each case on the total thickness of the layers (A) and (B) of the film.

**7.** Film according to one of the preceding claims, **characterised in that** layer (A) contains at least 80 per cent by weight, preferably at least 95 per cent by weight and most preferably 100 per cent by weight of the at least one first polyethylene (PE-1) based on the total weight of the layer (A).

**8.** Film according to one of the preceding claims, **characterised in that** layer (A) does not contain any polyethylene that has a molecular weight which is higher than the molecular weight of the first polyethylene (PE-1).

**9.** Film according to one of the preceding claims, **characterised in that** layer (A) does not contain any polypropylene.

**10.** Film according to one of the preceding claims, **characterised in that** the first polyethylene (PE-1) has a weight-average molecular weight (Mw) in the range from 200,000 g/mol to 450,000 g/mol and the second polyethylene (PE-2) has a weight-average molecular weight (Mw) in the range from 500,000 g/mol to 1,500,000 g/mol.

11. Film according to one of the preceding claims, **characterised in that** the at least one high molecular weight polyethylene (PE-H) additionally contains at least one third polyethylene (PE-3) which has a higher average molecular weight than the second polyethylene (PE-2).

12. Film according to one of the preceding claims, **characterised in that** the first polyethylene (PE-1) has a weight-average molecular weight (Mw) in the range from 200,000 g/mol to 450,000 g/mol and the second polyethylene (PE-2) has a weight-average molecular weight (Mw) in the range from 500,000 g/mol to 900,000 g/mol.

13. Film according to one of the preceding claims, in particular according to claim 7, **characterised in that** at least one layer (A) forms an outer layer of the film, the layer (B) contains at least 80 per cent by weight of the at least one high molecular weight polyethylene (PE-H) based on the total weight of the layer (B), the total mass of all layers (A) is 10 to 35 per cent by weight and the total mass of all layers (B) is 65 to 90 per cent by weight based in each case on the entire film, and the thickness of the film is in a range from 3 $\mu$m to 50 $\mu$m.

14. Film according to one of the preceding claims, **characterised in that** it contains additives, wherein the additives are preferably fillers.

15. Film according to one of the preceding claims, **characterised in that** it has at least one ceramic coating with ceramic particles which is directly connected to the surface of at least one layer (A).

16. Battery separator film (BSF) comprising a film according to one of the preceding claims.

17. Lithium ion battery, comprising a film according to one of the preceding claims.

18. Method for producing a film according to one of claims 1 to 16, comprising the following steps:

- providing a first polyethylene (PE-1) which has a weight-average molecular weight (Mw) in the range from 200,000 g/mol to 600,000 g/mol,
- providing a second polyethylene (PE-2) which has a weight-average molecular weight (Mw) of from 400,000 g/mol to 1,500,000 g/mol, wherein the weight-average molecular weight of the second polyethylene (PE-2) is higher than that of first polyethylene (PE-1),
- providing a first fluid (Fluid 1) having a boiling point of 135 to 300°C,
- providing a second fluid (Fluid 2) having a boiling point of 135 to 300°C,
- melting the first polyethylene (PE-1) and mixing the first fluid (Fluid 1) with the molten first polyethylene (PE-1) in order to obtain a first mixture comprising 30 to 70 per cent by weight of the first fluid (Fluid 1), based on the total mass of the first mixture,
- melting the second polyethylene (PE-2) and mixing the second fluid (Fluid 2) with the molten second polyethylene (PE-2) in order to obtain a second mixture comprising 30 to 70 per cent by weight of the second fluid (Fluid 2), based on the total mass of the second mixture,
- coextruding the mixtures thus obtained by means of a multiple slot die to produce a multi-layered melt, wherein the first mixture forms at least one layer (A) and the second mixture forms at least one layer (B),
- cooling the multi-layered melt thus obtained to form a film (cast film),
- stretching the film thus obtained in the machine direction (MD),
- carrying out a heat treatment (annealing),
- stretching the machine-direction-stretched film thus obtained in the transverse direction (TD),
- carrying out a heat treatment, wherein the fluids still contained in the film pass over into the gas phase,
- wherein the fluids 1 and 2 are organic liquids, namely

   a) organic liquids which do not comprise any heteroatoms, or do not comprise any heteroatoms apart from oxygen, and do not comprise any aromatic groups, and/or
   b) alkanes or mixtures thereof.

19. Method according to claim 18, **characterised in that** the stretch ratio during stretching in the machine direction is in the range from 5 to 9 and **in that** the stretch ratio during stretching in the transverse direction is in the range from 5 to 9, and **characterised in that** during the heat treatment following stretching in the transverse direction (TD), the film is relaxed in the transverse direction by 5% to 10% of the stretch ratio in the transverse direction.

**20.** Method according to either of claims 18 or 19, **characterised in that** during the heat treatment following stretching in the machine direction (MD), the film is relaxed in the machine direction by up to 5% of the stretch ratio in the machine direction.

**21.** Film according to one of claims 1 to 16 or method according to one of claims 18 to 20, **characterised in that** the thickness of the film is in a range from 3 µm to 50 µm, preferably in a range from 5 µm to 30 µm.

**Revendications**

**1.** Film orienté biaxialement comprenant au moins une couche (A) et au moins une couche (B), dans lequel

la couche (A) contient au moins un premier polyéthylène (PE-1) et la couche (B) contient au moins un polyéthylène de poids moléculaire élevé (PE-H), lequel comprend au moins un deuxième polyéthylène (PE-2), et dans lequel

la couche (A) contient au moins 50 pourcents en poids de l'au moins un premier polyéthylène (PE-1) par rapport au poids total de la couche (A), la couche (B) contient au moins 50 pourcents en poids de l'au moins un polyéthylène de poids moléculaire élevé (PE-H) par rapport au poids total de la couche (B) et l'au moins un polyéthylène de poids moléculaire élevé (PE-H) contient au moins 50 pourcents en poids de l'au moins un deuxième polyéthylène (PE-2) par rapport au poids total de l'au moins un polyéthylène de poids moléculaire élevé (PE-H), et

dans lequel l'au moins un premier polyéthylène (PE-1) présente un poids moléculaire en poids moyen (Mw) dans la plage de 200 000 g/mol à 600 000 g/mol, l'au moins un deuxième polyéthylène (PE-2) présente un poids moléculaire en poids moyen (Mw) dans la plage de 400 000 g/mol à 1 500 000 g/mol et l'au moins un polyéthylène de poids moléculaire élevé (PE-H) et l'au moins un deuxième polyéthylène (PE-2) présentent respectivement un poids moléculaire en poids moyen, lequel est plus élevé que le poids moléculaire moyen en poids de l'au moins un premier polyéthylène (PE-1, et

dans lequel le film présente une porosité dans la plage de 30 % à 70 %, déterminée comme indiqué dans la description, et des copolymères qui contiennent à côté de l'éthylène jusqu'à 10 pourcents en poids d'alpha-oléfines entrent également dans la désignation de polyéthylène.

**2.** Film selon la revendication 1, **caractérisé en ce qu'**il comprend au moins deux couches (A) et une couche (B) qui sont disposées dans l'ordre A-B-A.

**3.** Film selon l'une des revendications précédentes, **caractérisé en ce que** l'au moins une couche (A) forme une couche extérieure du film.

**4.** Film selon l'une des revendications précédentes, **caractérisé en ce que** les deux couches extérieures du film selon l'invention sont formées à base de couches (A).

**5.** Film selon l'une des revendications précédentes, **caractérisé en ce que** la porosité de la couche (A) du film selon l'invention se situe dans une plage de 35 à 70 % et la porosité de la couche (B) du film selon l'invention se situe dans une plage de 30 à 65 %.

**6.** Film selon l'une des revendications précédentes, **caractérisé en ce que** la proportion de l'épaisseur de toutes les couches (A) du film selon l'invention [se situe] dans la plage de 5 à 50 % et la proportion de toutes les couches (B) [se situe] dans la plage de 50 à 95 % respectivement, par rapport à l'épaisseur totale des couches (A) et (B) du film.

**7.** Film selon l'une des revendications précédentes, **caractérisé en ce que** la couche (A) contient au moins 80 pourcents en poids, de préférence au moins 95 pourcents en poids et idéalement 100 pourcents en poids de l'au moins un premier polyéthylène (PE-1), par rapport au poids total de la couche (A).

**8.** Film selon l'une des revendications précédentes, **caractérisé en ce que** la couche (A) ne contient pas de polyéthylène qui présente un poids moléculaire qui est supérieur au poids moléculaire du premier polyéthylène (PE-1).

**9.** Film selon l'une des revendications précédentes, **caractérisé en ce que** la couche (A) ne contient pas de polypropylène.

**10.** Film selon l'une des revendications précédentes, **caractérisé en ce que** le premier polyéthylène (PE-1) présente un poids moléculaire en poids moyen (Mw) dans la plage de 200 000 g/mol à 450 000 g/mol et le deuxième polyéthylène (PE-2) présente un poids moléculaire en poids moyen (Mw) dans la plage de 500 000 g/mol à 1 500 000 g/mol.

**11.** Film selon l'une des revendications précédentes, **caractérisé en ce que** l'au moins un polyéthylène de poids moléculaire élevé (PE-H) contient en outre au moins un troisième polyéthylène (PE-3) qui présente un poids moléculaire moyen plus élevé que le deuxième polyéthylène (PE-2).

**12.** Film selon l'une des revendications précédentes, **caractérisé en ce que** le premier polyéthylène (PE-1) présente un poids moléculaire en poids moyen (Mw) dans la plage de 200 000 g/mol à 450 000 g/mol et le deuxième polyéthylène (PE-2) présente un poids moléculaire en poids moyen (Mw) dans la plage de 500 000 g/mol à 900 000 g/mol.

**13.** Film selon l'une des revendications précédentes, notamment la revendication 7, **caractérisé en ce que** l'au moins une couche (A) forme une couche extérieure du film, la couche (B) contient au moins 80 pourcents en poids de l'au moins un polyéthylène de poids moléculaire élevé (PE-H) par rapport au poids total de la couche (B), la masse totale de toutes les couches (A) est de 10 à 35 pourcents en poids et la masse totale de toutes les couches (B) est de 65 à 90 pourcents en poids, respectivement par rapport au film total, et l'épaisseur du film se situe dans une plage de 3 $\mu$m à 50 $\mu$m.

**14.** Film selon l'une des revendications précédentes, **caractérisé en ce qu'**il contient des additifs, où il s'agit de préférence de charges.

**15.** Film selon l'une des revendications précédentes, **caractérisé en ce qu'**il présente au moins un revêtement en céramique avec des particules de céramique qui sont directement liées avec la surface d'au moins une couche (A).

**16.** Film séparateur de batterie (BSF) comprenant un film selon l'une des revendications précédentes.

**17.** Batterie à ions lithium comprenant un film selon l'une des revendications précédentes.

**18.** Procédé de fabrication d'un film selon l'une des revendications 1 à 16, comprenant les étapes :

- de mise au point d'un premier polyéthylène (PE-1), lequel présente un poids moléculaire en poids moyen (Mw) dans la plage de 200 000 g/mol à 600 000 g/mol,
- de mise au point d'un deuxième polyéthylène (PE-2), lequel présente un poids moléculaire en poids moyen (Mw) de 400 000 à 1 500 000 g/mol, le poids moléculaire en poids moyen du deuxième polyéthylène (PE-2) étant supérieur à celui du premier polyéthylène (PE-1),
- de mise au point d'un premier fluide (Fluide 1) pourvu d'un point d'ébullition de 135 à 300 °C,
- de mise au point d'un deuxième fluide (Fluide 2) pourvu d'un point d'ébullition de 135 à 300 °C,
- de fusion du premier polyéthylène (PE-1) et de mélange du premier fluide (Fluide 1) avec le premier polyéthylène (PE-1) fondu afin d'obtenir un premier mélange qui comprend de 30 à 70 pourcents en poids du premier fluide (Fluide 1), par rapport à la masse totale du premier mélange,
- de fusion du deuxième polyéthylène (PE-2) et de mélange du deuxième fluide (Fluide 2) avec le deuxième polyéthylène (PE-2) fondu afin d'obtenir un deuxième mélange qui comprend de 30 à 70 pourcents en poids du deuxième fluide (Fluide 2), par rapport à la masse totale du deuxième mélange,
- de coextrusion des mélanges ainsi obtenus au moyen d'une buse à fentes larges multiples moyennant la fabrication d'un produit fondu en plusieurs couches, où le premier mélange forme au moins une couche (A) et le deuxième mélange forme au moins une couche (B),
- de refroidissement du produit fondu en plusieurs couches ainsi obtenu pour donner un film (film coulé),
- d'étirage du film ainsi obtenu dans la direction longitudinale (MD),
- d'exécution d'un traitement thermique (recuit),
- d'étirage du film étiré dans la direction longitudinale ainsi obtenu dans la direction transversale (TD),
- d'exécution d'un traitement thermique, où les fluides encore contenus dans le film passent en phase gazeuse,
- où, dans le cas des fluides 1 et 2, il s'agit de liquides organiques, à savoir

a) des liquides organiques qui ne comprennent pas d'hétéroatomes ou pas d'hétéroatomes à l'exclusion de l'oxygène et ne contiennent pas de groupements aromatiques, et/ou

b) des alcanes ou des mélanges de ceux-ci.

**19.** Procédé selon la revendication 18, **caractérisé en ce que** le taux d'étirage lors de l'étirage dans la direction longitudinale se situe dans la plage de 5 à 9 et que le taux d'étirage lors de l'étirage dans la direction transversale se situe dans la plage de 5 à 9 et **caractérisé en ce que**, lors du traitement thermique, on effectue après l'étirage dans la direction transversale (TD) une relaxation du film en direction transversale de 5 % à 10 % du taux d'étirage en direction transversale.

**20.** Procédé selon l'une des revendications 18 ou 19, **caractérisé en ce que** lors du traitement thermique, après l'étirage en direction longitudinale (MD), on effectue une relaxation du film jusqu'à 5 % du taux d'étirage en direction longitudinale.

**21.** Film selon l'une des revendications 1 à 16 ou procédé selon l'une des revendications 18 à 20, **caractérisé en ce que** l'épaisseur du film se situe dans une plage de 3 $\mu$m à 50 um, de préférence dans une plage de 5 um à 30 $\mu$m.

**EP 3 966 037 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012138398 A1
- US 6432586 B
- US 2009117454 A1
- US 2017309883 A1
- US 2017151534 A1
- EP 3006210 A
- US 6432586 B1